(19)

**Europäisches Patentamt**
**European Patent Office**
**Office européen des brevets**

(11) **EP 3 216 136 B1**

(12) **EUROPEAN PATENT SPECIFICATION**

(45) Date of publication and mention
of the grant of the patent:
**30.08.2023 Bulletin 2023/35**

(21) Application number: **15856758.6**

(22) Date of filing: **25.06.2015**

(51) International Patent Classification (IPC):
**H04B 7/06** (2006.01)      **H04W 72/0453** (2023.01)
**H04W 74/08** (2009.01)      **H04W 72/542** (2023.01)
**H04L 5/00** (2006.01)

(52) Cooperative Patent Classification (CPC):
**H04B 7/0626; H04L 5/001; H04L 5/0057;**
**H04L 5/0094; H04W 72/542;** H04W 72/0453;
H04W 74/0808

(86) International application number:
**PCT/US2015/037632**

(87) International publication number:
**WO 2016/073039 (12.05.2016 Gazette 2016/19)**

(54) **USER EQUIPMENT AND METHOD FOR COMMUNICATING ON CELLS CONFIGURED FOR LICENSED ASSISTED ACCESS (LAA)**

BENUTZERGERÄT UND VERFAHREN ZUR KOMMUNIKATION AUF ZELLEN MIT KONFIGURATION FÜR LIZENZIERTEN UNTERSTÜTZTEN ZUGRIFF (LAA)

ÉQUIPEMENT UTILISATEUR ET PROCÉDÉ PERMETTANT DE COMMUNIQUER SUR DES CELLULES CONÇUES POUR UN ACCÈS ASSISTÉ SOUS LICENCE (LAA)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2014   US 201462076364 P**
**20.01.2015   US 201562105443 P**

(43) Date of publication of application:
**13.09.2017   Bulletin 2017/37**

(73) Proprietor: **Apple Inc.**
**Cupertino, CA 95014 (US)**

(72) Inventors:
• **HE, Hong**
**Beijing 100190 (CN)**
• **KWON, Hwan-Joon**
**Santa Clara, California 95054 (US)**
• **FWU, Jong-Kae**
**Sunnyvale, California 94087 (US)**
• **HAN, Seunghee**
**Cupertino, California 95014 (US)**
• **XIONG, Gang**
**Beaverton, Oregon 97006 (US)**

• **DAVYDOV, Alexei Vladimirovich**
**Nizhny Novgorod, 603132 (RU)**

(74) Representative: **Wardle, Callum Tarn**
**Withers & Rogers LLP**
**2 London Bridge**
**London SE1 9RA (GB)**

(56) References cited:
**US-A1- 2010 303 036      US-A1- 2013 165 134**
**US-A1- 2013 208 604      US-A1- 2013 208 604**
**US-A1- 2013 315 114      US-A1- 2014 071 931**
**US-A1- 2014 112 277      US-A1- 2014 211 873**
**US-B1- 6 947 490**

• **LG ELECTRONICS: "Candidate solutions for LAA operation", 3GPP DRAFT; R1-144042 LAA CANDIDATE SOLUTIONS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875341, Retrieved from the Internet: URL:http://www.3gpp.org/ftp/Meetings_3GPP_ SYNC/RAN1/Docs/ [retrieved on 2014-10-05]**

**Description**

PRIORITY APPLICATION

TECHNICAL FIELD

Embodiments pertain to broadband wireless communication. Some embodiments relate to cellular communication networks including 3GPP (Third Generation Partnership Project) networks, 3GPP LTE (Long Term Evolution) networks, and 3GPP LTE-A (LTE Advanced) networks, although the scope of the embodiments is not limited in this respect. Some embodiments relate to communications using licensed assisted access (LAA). Some embodiments relate to channel state information (CSI) measurement resources.

BACKGROUND

As the demand for communicating voice and video increases, quality of service can deteriorate as the radio access networks approach their peak capacity. Thus, there are general needs for devices, systems and methods that provide a robust protocol for opportunistic use of available communication bands.

Patent Publication No. US 2014071931 A1 relates to a wireless communication system that supports carrier aggregation, and in particular to a method and a device for transmitting control information.

Patent Publication No. US 2013315114 A1 describes a scheduling method of a base station in a carrier aggregation system. The method includes transmitting uplink-downlink (UL-DL) configuration information on a time division duplex frame used in a second serving cell through a first serving cell; and communicating with a user equipment (UE) through a subframe of the second serving cell configured by the UL-DL configuration information, wherein the first serving cell and the second serving cell are serving cells allocated to the UE.

Patent Publication No. US 2014112277 A1 relates to a wireless communication system, in particular to a method for performing communication on a specific single secondary cell in a wireless communication system supporting carrier aggregation and to an apparatus for same.

Patent Publication No. US 2013208604 A1 contemplates methods, systems, and apparatuses for interference measurement in a wireless communication network, including wireless communication networks the employ MIMO in uplink and/or downlink communication.

**SUMMARY**

According to a first aspect of the invention there is provided a user equipment in accordance with claim 1. According to another aspect of the invention there is provided a non-transitory computer-readable storage medium in accordance with claim 8.

BRIEF DESCRIPTION OF THE DRAWINGS

FIG. 1 shows an example of a portion of an end-to-end network architecture of an LTE network with various components of the network in accordance with some embodiments;

FIG. 2 is an example format for a licensed assisted access (LAA) downlink control information (DCI) including uplink/downlink configuration on unlicensed component carriers (U-CCs) in accordance with some embodiments;

FIG. 3 is a diagram illustrating uplink/downlink configuration for subframes of radio frames on a U-CC in accordance with some embodiments;

FIG. 4 illustrates, for purposes of comparison with example embodiments, physical uplink shared channel (PUSCH) transmission issues as can occur on some systems on U-CCs;

FIG. 5A illustrates a first example LAA validation period for LAA communications on a U-CC in accordance with some embodiments;

FIG. 5B illustrates a second example LAA validation period for LAA communications on a U-CC in accordance with some embodiments;

FIG. 6A illustrates a first mechanism for time division multiplexing of an LAA start notification signal and a busy signal in accordance with some embodiments;

FIG. 6B illustrates a second mechanism for time division multiplexing of an LAA start notification signal and a busy signal in accordance with some embodiments;

FIG. 7 illustrates PUSCH transmission dependency on the presence of a LAA start notification signal, in accordance with some embodiments;

FIG. 8 illustrates an example LAA frame structure for uplink transmissions, to illustrate synchronized frame timing among aggregated component carriers in accordance with some embodiments;

FIG. 9 illustrates an example LAA frame structure for uplink transmissions, to illustrate un-synchronized frame timing among aggregated component carriers in accordance with some embodiments;

FIG. 10 illustrates a flexible frame structure for LAA communications on a U-CC in accordance with some embodiments;

FIG. 11 illustrates a use of listen-before-talk (LBT) to enable LTE and WiFi operators to share a same channel on unlicensed spectrum in accordance with some embodiments;

FIG. 12 illustrates a Type 1 CSI-RS transmission on an unlicensed carrier in an LAA system in accordance with some embodiments;

FIG. 13 illustrates a Type 2 of CSI-RS transmission on an unlicensed spectrum in an LAA system in accordance with some embodiments;

FIG. 14 illustrates a first approach for the second type of CSI-RS transmission illustrated in FIG. 13, in accordance with some embodiments;

FIG. 15 illustrates a DCI format for carrier aggregation (CA) support in accordance with some embodiments;

FIG. 16 illustrates a monitoring window for the second type of CSI-RS transmission illustrated in FIG. 13, in accordance with some embodiments;

FIG. 17 is a functional diagram of a User Equipment (UE) in accordance with some embodiments;

FIG. 18 is a functional diagram of an Evolved Node-B (eNB) in accordance with some embodiments; and

FIG. 19 is a flow diagram of a method for operating on a U-CC in accordance with some embodiments.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

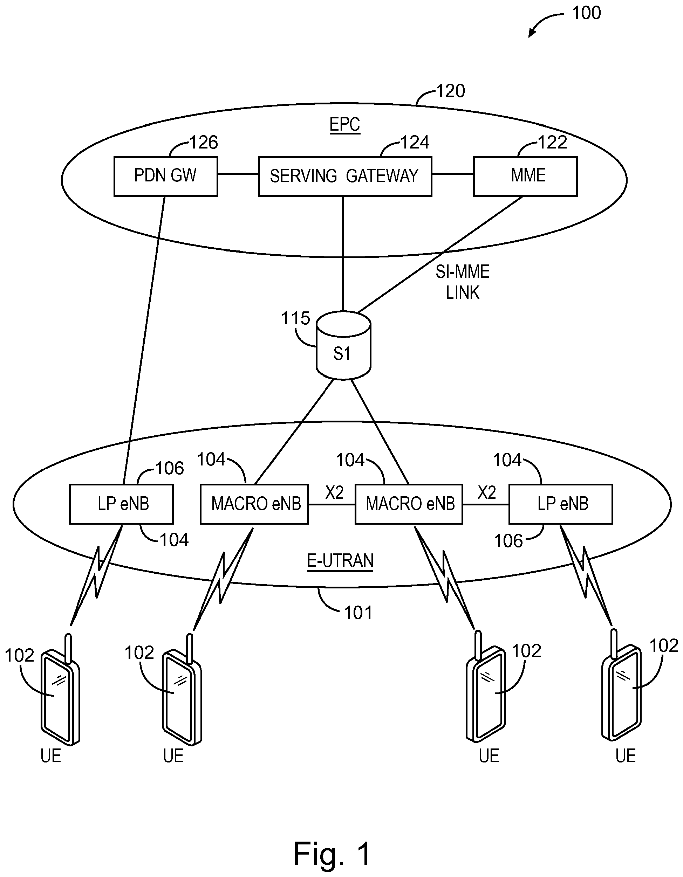

FIG. 1 shows an example of a portion of an end-to-end network architecture of an LTE network with various components of the network in accordance with some embodiments. The network 100 comprises a radio access network (RAN) (e.g., as depicted, the E-UTRAN or evolved universal terrestrial radio access network) 101 and the core network 120 (e.g., shown as an evolved packet core (EPC)) coupled together through an S1 interface 115. For convenience and brevity, only a portion of the core network 120, as well as the RAN 101, is shown in the example.

The core network 120 includes mobility management entity (MME) 122, serving gateway (serving GW) 124, and packet data network gateway (PDN GW) 126. The RAN includes enhanced node B's (eNBs) 104 (which may operate as base stations) for communicating with user equipment (UE) 102. The eNBs 104 may include macro eNBs and low power (LP) eNBs.

The MME is similar in function to the control plane of legacy Serving GPRS Support Nodes (SGSN). The MME manages mobility aspects in access such as gateway selection and tracking area list management. The serving GW 124 terminates the interface toward the RAN 101, and routes data packets between the RAN 101 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 101 including but not limited to RNC (radio network controller functions) such as radio bearer management, uplink and downlink dynamic radio resource management and data packet scheduling, and mobility management. In accordance with embodiments, UEs 102 may be configured to communicate OFDM communication signals with an eNB 104 over a multicarrier communication channel in accordance with an OFDMA communication technique. The OFDM signals may comprise a plurality of orthogonal subcarriers.

The S1 interface 115 is the interface that separates the RAN 101 and the EPC 120. It is split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a microcell. Femtocell eNBs are typically provided by a mobile network operator to its residential or enterprise customers. A femtocell is typically the size of a residential gateway or smaller, and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

Typically, downlink scheduling (assigning control and shared channel resource blocks to UEs within a cell) is performed at the eNB based on channel quality information fed back from the UEs to the eNB, and then the downlink resource assignment information is sent to a UE on the control channel (e.g., the physical downlink control channel (PDCCH) or evolved PDCCH (ePDCCH)) used for (assigned to) the LTE.

The demand for communicating one or both of voice data and video data continues to increase. A RAN 101 may experience heavy communication traffic which can lead to adverse network effects such as communication latency for example. As shown in FIG. 1, a RAN can include UE devices and eNB devices such as LP eNBs and/or macro eNBs. To alleviate network traffic, network capacity can be added by providing communication capability to the RAN devices from networks that operate using a communication spectrum not licensed for use by the cellular network devices. Communication peaks may occur locally and the RAN serving the locality may experience peak demand. The locality may include a WiFi network for computing devices such as laptop computers and computer tablets, but the wireless cellular devices are not licensed to operate in the WiFi communication spectrum (e.g., communication channels of 2.4 gigahertz (GHz) or 5GHz). According to some embodiments, the wireless cellular devices of a RAN (e.g., an LTE network) schedule communication time on the WiFi communication channel and communicate information using the WiFi communication spectrum unlicensed for operation of the device. Use of a network unlicensed to LTE network devices is sometimes referred to as unlicensed LTE (LTE-U) or a licensed assisted access (LAA) network.

To increase bandwidth of RF network communications, a cellular phone network may use carrier aggregation. In carrier aggregation, more than one carrier or channel is used by a network device to increase transmission bandwidth. To extend an LTE platform into LAA, frequency bands of the LAA can be considered as available carriers for carrier aggregation. In systems using carrier aggregation, one or more low power Scell(s) (the exact number of SCells permitted will be based regulatory power limits) operates in unlicensed spectrum and is either downlink-only (i.e. supplemental downlink (DL)) or contains uplink (UL) and DL. The PCell may operate in the licensed spectrum and the PCell can operate in either frequency division duplexed (FDD) mode or time division duplexed (TDD) mode.

Embodiments provide apparatuses and methods to support LAA communication on both the UL and the DL by providing or using uplink/downlink configuration for subframes within radio frames transmitted on the unlicensed spectrum. Additionally, embodiments provide conditional physical uplink shared channel (PUSCH) transmission and channel state information (CSI) measurement for carriers on the unlicensed spectrum. Embodiments further provide LAA-specific CSI Reference Signal (CSI-RS) design for unlicensed component carriers (U-CCs).

In various embodiments, an eNB 104 operating on a first serving cell can use a downlink control information (DCI) format, specific to LAA, to indicate an uplink/downlink configuration for a U-CC operating on a second serving cell. The uplink/downlink configuration may indicate, for radio frames transmitted on the second serving cell, which subframes are to be used for uplink transmissions and which subframes are to be used for downlink transmissions, after the eNB 104 grabs the corresponding U-CC.

Embodiments also provide for an eNB 104 to transmit, and a UE 102 to receive, a LAA start notification signal to inform the UE 102 when the LAA operation starts after clear channel assessment (CCA) operations have been performed on the channel. Using the LAA start notification signal, the UE 102 can either transmit or suspend scheduled PUSCH transmissions and measure CSI values for U-CCs. The corresponding CSI-RSs may be transmitted periodically or aperiodically in various embodiments.

*Synchronized Frame Timing Among Aggregated Component Carriers*

Methods in accordance with some embodiments can synchronize frame timing among aggregated U-CCs and licensed component carriers (L-CCs) by Carrier Aggregation (CA). In at least these embodiments, U-CCs are synchronized (in time) at boundaries, (e.g., subframe boundaries or frame boundaries) with corresponding boundaries of aggregated L-CCs. Accordingly, primary synchronization signals (PSS), secondary synchronization signals (SSS), cell specific reference signals (CRS), and CSI-RS, which are transmitted on primary component carriers (PCC) or a co-located secondary component carrier (SCC) on a licensed band, can all be synchronized based on common frame timing applied across CCs on licensed and unlicensed bands. At least these embodiments can provide improved speeds for LAA data transmission, as well as simplified UL control protocol design (e.g., HARQ-ACK timing, physical uplink control channel (PUCCH) resource mapping rules, channel quality indicator (CQI) configuration, etc.).

At least two radio frame structures are supported for a U-CC, although embodiments are not limited thereto. For example, a U-CC can support the supplemental downlink structure, wherein subframes are all available for DL transmission. Alternatively, a U-CC can support a frame type 2 structure, which can have a plurality of several predefined uplink-downlink (UL-DL) configurations, or an UL/DL continuous LAA transmission burst in a predefined time-division multiplexing (TDM) pattern. In particular, uplink/downlink configurations defined in accordance with a standard of the 3rd Generation Partnership Project (3GPP) family of standards for LTE or LTE-A can be used.

Uplink/Downlink configurations

In embodiments, a UE 102 is configured by a higher layer to decode the PDCCH with the CRC scrambled by an LAA-specific radio network temporary identifier (LAA-RNTI). In at least these embodiments, the UE 102 may monitor and decode the PDCCH on a licensed PCC according to the combination defined in Table 1:

**Table 1: PDCCH configured by LAA-RNTI.**

| DCI format | Search space |
|------------|--------------|
| 1C or 1A   | common       |

An LAA-specific DCI format may be used for indicating the uplink/downlink configuration for U-CCs, and may include a set of uplink/downlink configuration indication fields, where each field includes a value (for example, a 2-bit value, 3-bit value, or other bit length value) to indicate one of the possible specification-defined uplink/downlink configurations or the supplemental DL configuration or one of the defined UL/DL consecutive transmission patterns introduced in 3GPP LTE Rel-13 for LAA operation on U-CC, described earlier herein. For example, the uplink/downlink configurations can include those given according to Table 4.2-2 of 3GPP Technical Specification (TS) 36.211, release 8 or later.

According to these embodiments, a UE 102 enabled for LAA and configured with two or more U-CCs can be indicated with independent and separate uplink/downlink configurations for the two or more U-CCs using one LAA-specific DCI format. In addition, one higher layer parameter is provided by the network to assign identification information, for an example an index, to the uplink/downlink configuration for a certain U-CC.

In one embodiment, to support the dynamic frequency selection for radar avoidance in certain bands/regions, a single bit-map field indicating each serving cell on/off state for LAA communication can be included in the LAA-DCI. The number of uplink/downlink configuration fields in a LAA-DCI could be fixed regardless of the associated serving cell on/off state, or only present if the corresponding serving cell is enabled (e.g., on) for LAA operation. Padding can be used to ensure the size of the DCI message remains the same size as defined format 1C or 1A messages, to avoid blind decoding at the UE 102. In other embodiments, the size of the uplink/downlink configuration indication field can be extended by one bit, with that extra bit being an LAA off state indication, which can be signaled with a reserved code state "1111." It will be understood that these are just example code states, however, and embodiments are not limited thereto.

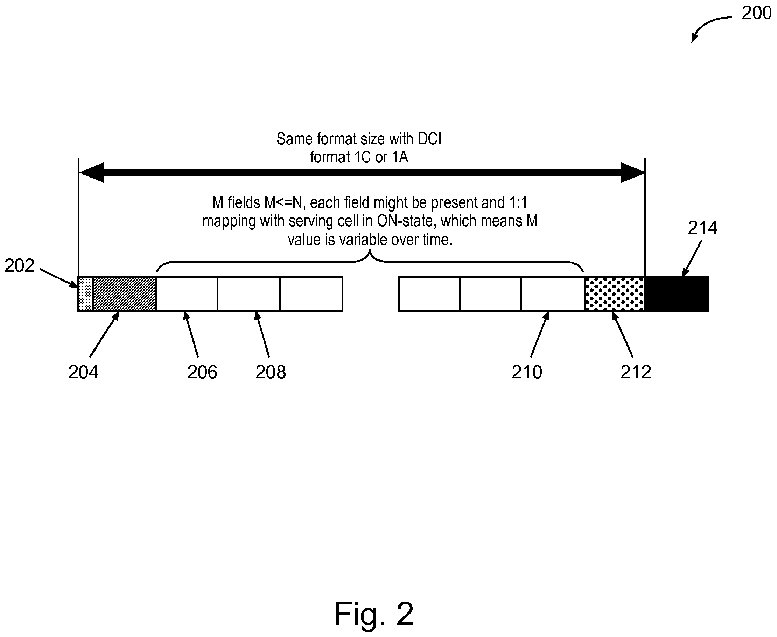

FIG. 2 is an example format 200 for LAA downlink control information (DCI) including uplink/downlink configuration on unlicensed component carriers (U-CCs) in accordance with some embodiments. A message formatted according to the LAA-DCI format in accordance with various embodiments can be the same size as that defined in 3GPP TS 36.212 for DCI format 1A/1C messages. Indicator 202 explicitly indicates whether the eNB 104 has grabbed the U-CC. Grabbing procedures will be described in more detail later herein. Bit-map string 204, which is N bits in length, can include an on/off field for indicating whether corresponding serving cells are in an on or off state with respect to LAA operation. Fields 206 and 208 provide an uplink/downlink configuration for the corresponding serving cell. For example, field 206 can provide an uplink/downlink configuration for a first U-CC, and field 208 can provide an uplink/downlink configuration for a second U-CC. Field 210 will provide an uplink/downlink configuration for the M-1 serving cell, where M is the number of U-CC serving cells. As described earlier herein, each of fields 206, 208, and 210 will include a value (for example, a 2-bit value, 3-bit value, or other bit length value) to indicate one of the possible uplink/downlink configurations defined in 3GPP TS 36.211 or the supplemental DL configuration. Padding bits 212 can be added as described earlier herein such that the size of the LAA-DCI format 200 message is equal to that of the standard-defined DCI format 1A/1C messages. CRC bits 214 of the LAA-DCI format 200 are scrambled by the LAA-RNTI as described earlier herein.

A higher layer may configure the subframe(s) in which the UE 102 monitors LAA-DCI. For example, the higher layer may configure the UE 102 to monitor LAA-DCI in subframes 0 and 5, every 10 milliseconds, on a licensed PCC, although embodiments are not limited to any particular periodicity for monitoring LAA-DCI, or to any particular CC. By way of example, if the UE 102 detects LAA-DCI in subframe #0 of a radio frame k on the PCC, the uplink/downlink configuration for radio frame k is given by the uplink/downlink configuration indication signaled on the PDCCH associated with the assigned index within the LAA-DCI.

As another example, if the UE 102 detects LAA-DCI in a subframe other than the subframe #0 of a radio frame k-1, the uplink/downlink configuration for radio frame k is given by the detected LAA-DCI. If the UE 102 does not detect LAA-DCI for a radio frame k on the U-CC, UE 102 may assume, in some embodiments, that U-CC is not utilized by the network for the corresponding radio frame. Alternatively, the UE 102 may assume that LAA operation is not enabled (e.g., off, or with a status bit set to 0) for the corresponding radio frame on the corresponding serving cell.

The UE 102 shall assume that the network uses the indicated uplink/downlink configuration for radio frame k for LAA data communication after the eNB 104 grabs U-CC access in radio frame k. The UE 102 can determine whether and when the eNB 104 grabs U-CC access according to the discovery signal mechanisms described later herein.

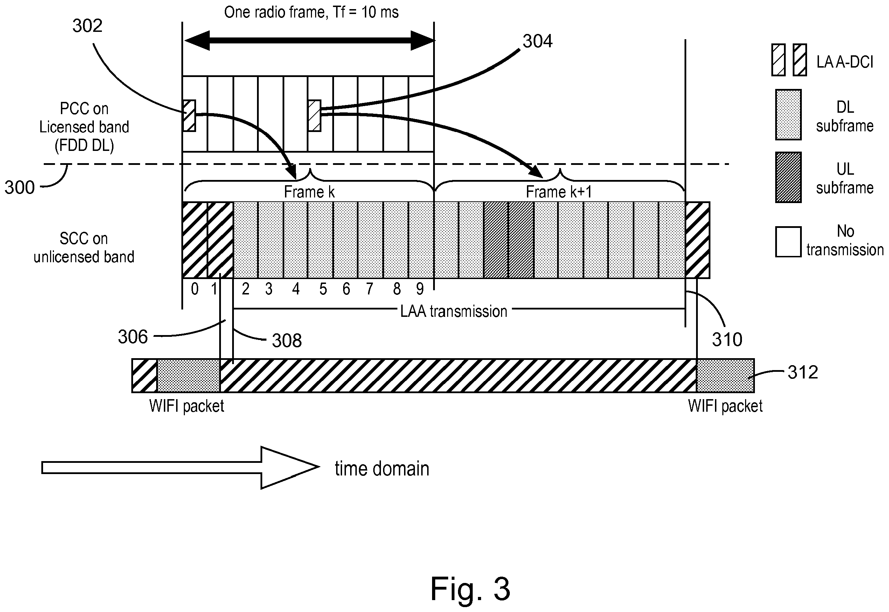

FIG. 3 is a diagram illustrating uplink/downlink configuration for subframes of radio frames on a U-CC in accordance with some embodiments. Subframes for the PCC (operating on a licensed band) are shown above the dashed line 300, and subframes for the SCC (operating on an unlicensed band) are shown below the dashed line 300. While one licensed band and one unlicensed band are shown, embodiments can be extended to include any number of licensed or unlicensed bands. In the example shown in FIG. 3, a LAA-enabled UE 102 (not shown in FIG. 3) is configured to monitor LAA-DCI in subframe #0 (302) and subframe #5 (304) every 10 milliseconds on the licensed PCC. As will be appreciated based on earlier discussion, however, a LAA-enabled UE 102 is not limited to monitoring LAA-DCI in any particular subframe or with any particular periodicity.

At 306, the eNB 104 performs a CCA operation. If the CCA operation is successful, the eNB 104 grabs the U-CC at 308. Thereafter, LAA transmission can occur on the secondary component carrier (SCC), which is referred to in some descriptions of some embodiments as U-CC, although the SCC can also include a L-CC for some embodiments or applications. Subframes will be configured as uplink or downlink according to the uplink/downlink configuration provided in the LAA-DCI on the PCC. The U-CC may be released at 310.

At any time, based on traffic demands or other network conditions, the eNB 104 can configure supplementary downlink in radio frame k+1 by transmitting LAA-DCI in subframe #0 and subframe #5 in radio frame k. As described earlier herein, a supplementary downlink configuration will result in configuration of all subframes as downlink subframes. Graph 312 illustrates that WiFi transmissions can occur on the U-CC before the eNB 104 grabs the U-CC at 308 and after the U-CC is released at 310. Between those points, LAA communications in accordance with various embodiments will occur using the U-CC.

### PDCCH monitoring and PDSCH/PUSCH scheduling timing

In at least those embodiments implementing synchronization of aggregated component carriers, a UE 102 configured with LAA can monitor control channels (e.g., the PDCCH) according to the uplink/downlink configuration for the U-CC indicated by the detected LAA-DCI. In embodiments for which the scheduling serving cell is FDD on the L-CC, the UE 102 can, upon detection on a given serving cell of a control channel (e.g., a PDCCH or ePDCCH) with DCI format 0/4 in subframe n intended for the UE 102, adjust the corresponding PUSCH transmission in subframe n+4 on the associated U-CC according to the information on the PDCCH or ePDCCH. In embodiments for which the scheduling serving cell is TDD on the L-CC, if the uplink/downlink configurations of at least two serving cells on the L-CC and the U-CC are different, then the uplink reference uplink/downlink configuration for PUSCH scheduling timing may be given according to a specification of the 3GPP family of specifications. For example, the uplink configuration may be given according to Table 8-0A of 3GPP TS 36.213, release 12 or later.

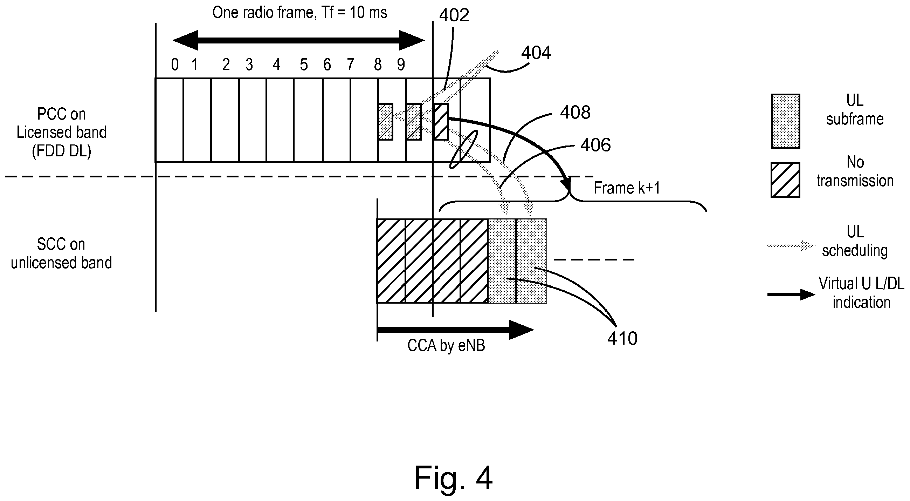

In some situations, the eNB 104 will inform the UE 102 that the UE 102 is to suspend scheduled PUSCH transmission in cases in which the eNB 104 failed to grab the U-CC for a given uplink subframe. FIG. 4 illustrates, for purposes of comparison with example embodiments, PUSCH transmission issues as can occur on some systems on U-CCs.

As shown in FIG. 4, the eNB 104 may provide DCI format 0/4 in subframe #8 (402) or in subframe #9 (404) on the PCC on a licensed band to schedule potential uplink transmission (e.g., PUSCH) on subframe #2 (406) or on subframe #3 (408), respectively, on an SCC on an unlicensed band. Meanwhile, the eNB 104 may perform a CCA operation to attempt trying to grab the SCC for LAA communication before subframe #2 (e.g., before the subframe for which the UE 102 is scheduled to perform PUSCH transmissions). If the eNB 104 is unable to grab the SCC, then embodiments provide a method by which the UE 102 is timely informed that PUSCH transmissions should be suspended in subframes (e.g., subframes 410).

In addition to PUSCH transmission issues, if the eNB 104 fails to grab the SCC, then the UE 102 may have difficulties in performing accurate CSI measurement on downlink subframes. Because the eNB 104 will not own the U-CC link for LAA transmissions, other radio access technology (RAT) operators may own that U-CC, and there will be a discrepancy in CSI measurements made by the LTE 102.

Embodiments address these PUSCH and CSI measurement concerns, among other concerns, by introducing a LAA start notification signal to explicitly indicate the first subframe for which the eNB 104 has successfully grabbed the corresponding SCC for LAA communication after performing CCA. Correspondingly, the UE 102 can transmit the pre-scheduled PUSCH and conduct CSI measurement or measurements corresponding to interference management resources (IMR), subject to the presence of the corresponding LAA start notification signal. In addition, LAA start notification signal can enable the LAA receiver to tune for automatic gain control (AGC) for signal reception.

In embodiments, the eNB 104 will transmit the LAA start notification signal periodically. However, this periodicity can be changed or adapted such that the LAA start notification signal is transmitted on or as close to the target transmission time as possible subject to the corresponding U-CC being idle. The periodicity with which the LAA start notification signal is transmitted can be either configured by a higher layer or fixed in 3GPP specification or other specification.

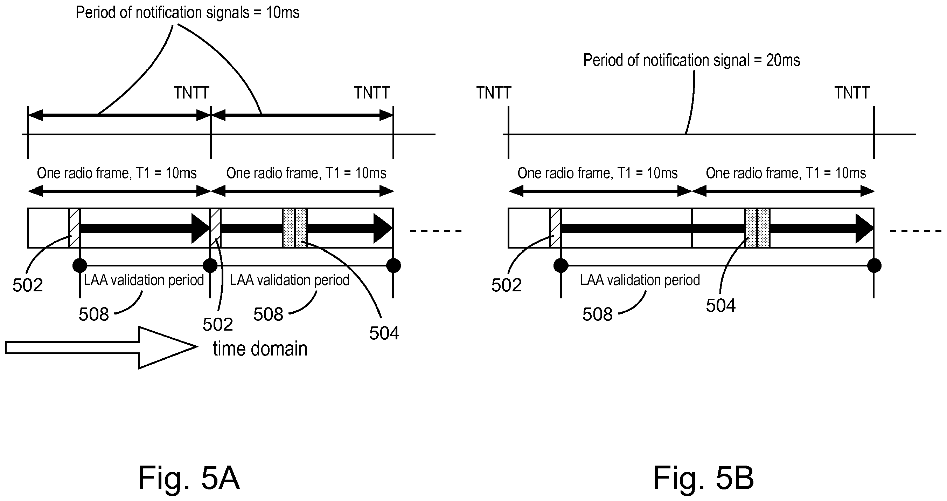

FIG. 5A and 5B illustrate LAA validation periods 508 for LAA communications on a U-CC in accordance with some embodiments. FIG. 5A illustrates an example in which the LAA start notification signal is transmitted every 10 milliseconds, and FIG. 5B illustrates an example in which the LAA start notification signal is transmitted every 20 milliseconds. Responsive to receiving or otherwise acquiring the LAA start notification signal at 502, or as explicitly indicated by the LAA-DCI described earlier herein, the UE 102 can determine that the eNB 104 has successfully grabbed the U-CC resources for LAA communication until the next Target Notification signal Transmission Time (TNTT). The UE 102 can then perform PUSCH transmission (e.g., on uplink subframes 504) and CSI measurements subsequent to determining that the eNB 104 has successfully grabbed U-CC resources.

Embodiments further provide for an LAA validation period 508 which, as shown in FIG. 5A and 5B, can extend from transmission of the LAA start notification signal until a next subsequent TNTT. Therefore, when the LAA start notification signal is transmitted every 10 milliseconds (e.g., in FIG. 5A) there can be twice the number of LAA validation periods 508 as would be possible if the LAA start notification signal 502 were transmitted every 20 milliseconds (e.g., in FIG. 5B). The LAA validation period 508 can also be defined as the period from transmission of the LAA start notification signal 502 to the end of the corresponding radio frame in which the LAA start notification signal 502 was transmitted. In other embodiments, the LAA validation period 508 associated with a LAA start notification signal 502 is determined based on a maximum transmission duration requirement, which can be defined by specification, for example according to a specification of the 3GPP family of specifications or other wireless specification or standard, or configured by the eNB 104 or other network element shown in FIG. 1.

The LAA start notification signal 502 can be implemented similarly to other synchronization signals. In some examples, the LAA start notification signal 502 can be similar to synchronization signals, for example PSS and SSS or other enhanced sequence defined in accordance with a specification of the 3GPP family of specifications, although embodiments are not limited thereto.

In embodiments, when a U-CC is sensed as idle after a CCA operation, a signal, such as a busy signal, may be transmitted by an LAA eNB 104 or UE 102 to keep the medium occupied until the start of the next LAA LTE subframe, in order to avoid, prohibit, or prevent access by other RATs or by other LAA operators for at least an alignment gap time period.

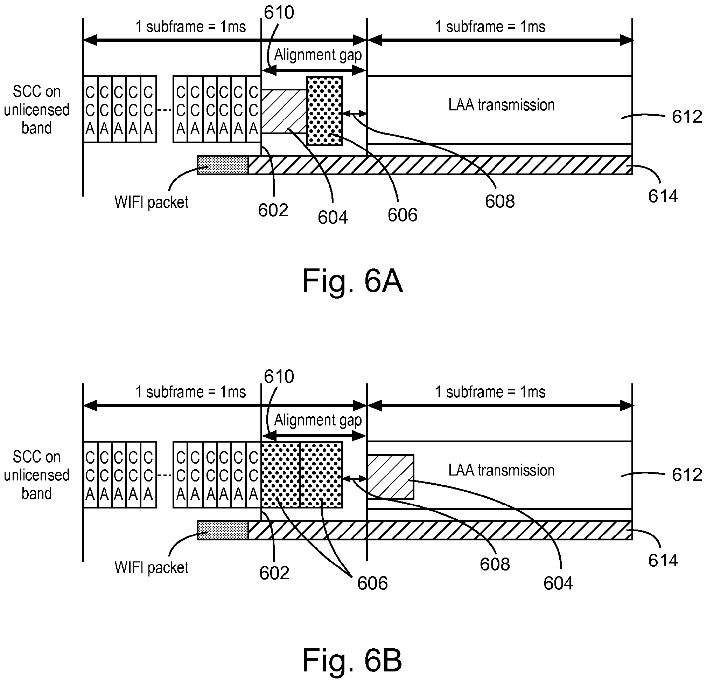

FIG. 6A illustrates a first mechanism for time division multiplexing of an LAA start notification signal 604 and a busy signal 606 in accordance with some embodiments. As shown in FIG. 6A, the eNB 104 starts to grab the U-CC at 602. If the eNB 104 is successful (e.g., the CCA operation performed by the eNB 104 is successful), the eNB 104 transmits the LAA start notification signal 604. Then, the eNB 104 transmits a busy signal 606 to hold the U-CC resource. A duration 608 can be left with no transmissions since this duration 608 is less than any of the short inter-frame space (SIFS), point coordination function (PCF) inter-frame space (PIFS), or distributed coordination function (DCF) inter-frame space (DIFS). The sum of the time taken to transmit the LAA start notification signal 604 plus, the busy signal/s 606, plus the duration 608, can be referred to as an alignment gap 610 that maintains alignment of subframes in time such that LAA transmissions 612 can start on the next subframe. Graph 614 illustrates that WiFi transmissions can occur on the U-CC before the eNB 104 grabs the U-CC at 602. Between those points, LAA communications in accordance with various embodiments may occur using the U-CC. Graph 614 illustrates that WiFi transmissions can occur on the U-CC before the eNB 104 grabs the U-CC at 602. Between those points, LAA communications in accordance with various embodiments may occur using the U-CC.

FIG. 6B illustrates a second mechanism for time division multiplexing of an LAA start notification signal 604 and a busy signal 606 in accordance with some embodiments. As shown in FIG. 6B, the eNB 104 starts to grab the U-CC at 602. If the eNB 104 is successful (e.g., the CCA operation performed by the eNB 104 is successful), the eNB 104 transmits a busy signal 606 to hold the U-CC resource. A duration 608 can be left with no transmissions since this duration is less than any of the SIFS, PIFS, or DIFS. The eNB 104 transmits the LAA start notification signal 604 in the first LAA transmission subframe on the U-CC. Embodiments implementing time division multiplexing according to FIG. 6B can allow a UE 102 to use the LAA start notification signal 604 for refinement of timing tracking. Herein, timing tracking refers to the UE 102 operation to track or measure phase shift and to derive the symbol timing information over time by using the detected notification signal, after which the UE 102 can correspondingly adjust the UE 102 OFDM symbol receiver to fulfill the requirements relevant to DL timing synchronization errors in the LAA system. Graph 614 illustrates that WiFi transmissions can occur on the U-CC before the eNB 104 grabs the U-CC at 602. Between those points, LAA communications in accordance with various embodiments may occur using the U-CC.

Embodiments support at least two types of non-zero power CSI-RS transmission on the U-CC. These two types of CSI-RS are further described later herein. These two types of CSI-RS transmission can be similar to CSI-RS structures within a resource block (RB) as defined in accordance with 3GPP specifications of release 10 or later. A Type 1 CSI-RS can be transmitted by the eNB 104 in the sub frame of the LAA start notification signal in the time domain, which can be used by the UE 102 to acquire CSI.

A Type 2 CSI-RS can be complementary to the Type 1 CSI-RS, wherein the eNB 104 transmits a Type 2 CIS-RS periodically. The periodicity can range between values defined according to specifications. For example, the periodicity of Type 2 CIS-RS transmission can vary from once every 5 milliseconds to once every 80 milliseconds, although embodiments are not limited to periodicities in any particular range.

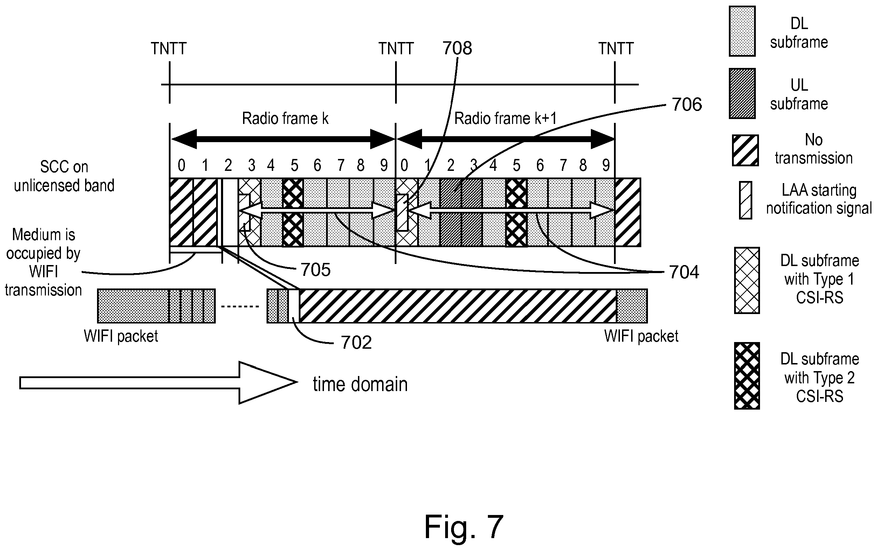

FIG. 7 illustrates PUSCH transmission dependency on the presence of a LAA start notification signal, in accordance with some embodiments. While not illustrated in FIG. 7, embodiments in accordance with FIG. 7 operate under the assumption that FDD is deployed on the PCC on the licensed band (not shown in FIG. 7) and acts as the scheduling serving cell for the SCC on the unlicensed band. Furthermore, it is assumed for purposes of illustration only that, for the SCC, supplemental DL configuration is configured for radio frame k, and that uplink/downlink configuration 4 is used in radio frame k+1. Here, configuration 4, and other configurations, can be defined in a specification, for example a specification of the 3GPP family of specifications or other wireless specification or technical specification. In the illustrated example, configuration 4 signifies a configuration wherein subframes 2 and 3 are to be uplink subframes and other subframes are to be downlink subframes. The LAA start notification signal periodicity is given to be 10 milliseconds, and the Type 2 CSI-RS subframe configuration $I_{CSI-RS}$ is given to be 10. It is further assumed that the UE 102 has detected a PDCCH with DCI format 0 or 4 in subframe #8 in radio frame k intended to scheduled PUSCH transmission on subframe #2 in radio frame *k+1.*

The UE 102 performs CCA at 702 to ensure that the U-CC is idle before PUSCH transmission. A LAA validation period 704 is indicated by the presence of the LAA start notification signal at 705 and 708. It will be appreciated that Type 1 CSI-RS is transmitted in the same subframe as the LAA start notification signal 705 and 708 and the Type 2 CSI-RS is transmitted periodically in subframe #5 in each radio frame illustrated. The LAA validation period 704 may be shorted due to the maximum transmission duration requirement. If the LAA validation period 704 is to be shortened, this will be known and accessible by both network side elements (FIG. 1) and the UE 102. At 706, the UE 102 will transmit PUSCH if the UE 102 detects the presence of the LAA start notification signal at 708.

If the UE 102 does not detect the presence of an LAA start notification signal in subframe m within radio frame k+1, where m < 2, then the LTE 102 may suspend the corresponding UL transmission in subframe #2 correspondingly. Otherwise the UE 102 may transmit PUSCH in subframe #2 in radio frame k+1.

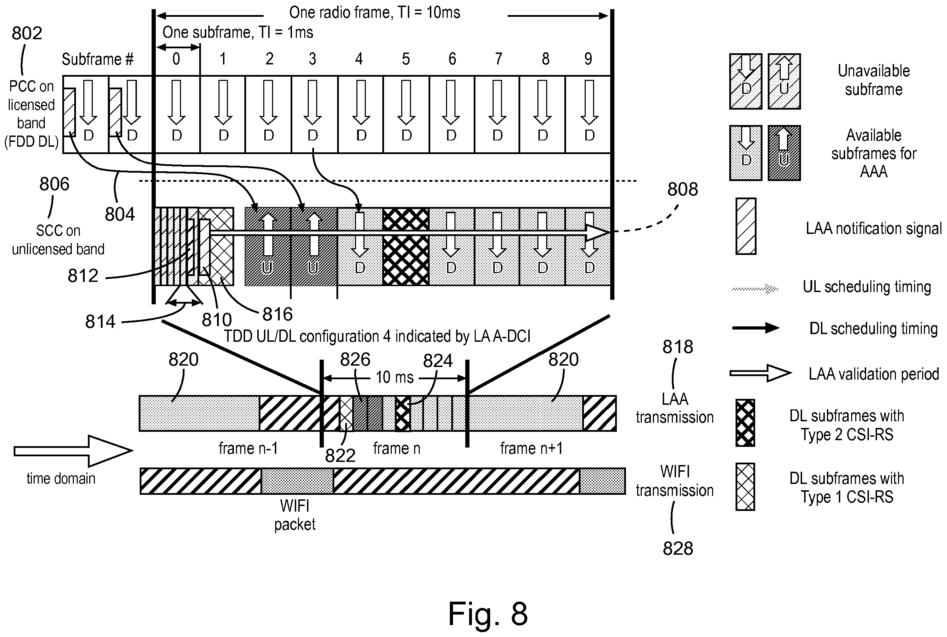

By way of summary, FIG. 8 illustrates an example LAA frame structure for uplink transmissions, to illustrate synchronized frame timing among aggregated component carriers in accordance with some embodiments. However, embodiments are not limited to the particular signals illustrated, or to the order or configuration of signals shown in FIG. 8.

In FIG. 8, the PCC 802 on a licensed band operates as the scheduling serving cell through cross-carrier scheduling 804, for the SCC 806 operating on an unlicensed band. Synchronized framing between U-CCs and L-CCs occurs during the LAA validation period 808, i.e., subframe boundaries are aligned. The LAA validation period 808 starts after the LAA start notification signal 810 as described earlier herein with reference to FIGs. 5A and 5B. A busy signal 812, CCA operation 814, and other signals such as DL subframes with Type 1 CSI-RS, Type 2 CSI-RS can also be present. Type 1 CSI-RS is transmitted in the same subframe as the LAA start notification signal 810.

LAA transmission on the SCC is show at the graph 818. As shown, LAA transmission can include downlink transmissions 820, downlink subframes 822 with Type 1 CSI-RS, downlink subframes 824 with Type 2 CSI-RS, uplink transmissions 826, or any other transmission or data types as can occur during LAA transmission. Graph 828 illustrates that WiFi transmissions can occur on the U-CC before the eNB 104 grabs the U-CC at 308 and after the U-CC is released at 310. Between those points, LAA communications in accordance with various embodiments will occur using the U-CC.

*Un-synchronized Frame Timing Among Aggregated Component Carriers*

In some embodiments, frame and sub-frame boundaries are not synchronized or otherwise aligned among aggregated U-CCs and L-CCs. In at least these embodiments, when the eNB 104 grabs the U-CC resources, the frame structure subject to corresponding LAA-DCI format is applied on the U-CC, with first LAA subframe being numbered from #0.

Un-synchronized frame embodiments are different from synchronized frame embodiments in some aspects, but are the same or similar in other aspects. For example, similarly to synchronized frame embodiments, the uplink/downlink configuration for radio frame k is broadcast by the eNB 104 in a periodic manner, similarly to that discussed above with respect to FIG. 3, through a LAA-DCI format on a configured L-CC. As with synchronized frame embodiments, the UE 102 in un-synchronized frame embodiments can assume that the eNB 104 uses the indicated uplink/downlink configuration that was broadcast for radio frame k once the eNB 104 grabs U-CC access within the radio frame k.

With respect to PUSCH scheduling and transmission, as with synchronized frame embodiments, a UE 102 configured with LAA can monitor PDCCH in each DL subframe on the scheduling serving cell on L-CC. Un-synchronized frame embodiments differ from synchronized frame embodiments in that the UE 102 can adjust for sub-frame level time shifting when performing PUSCH scheduling and CSI-RS subframe calculation. Additionally, the UE 102 will use L-CC frame timing as a reference for PUSCH scheduling and CSI-subframe counting purposes.

To schedule PUSCH transmissions, if the scheduling serving cell is FDD on L-CC, the UE 102 may, upon detection on a given serving cell of a PDCCH/ EPDCCH with DCI format 0/4 in subframe n intended for the UE 102, adjust the corresponding PUSCH transmission in subframe $n+4+k$ on U-CC according to information included in the PDCCH/ePDCCH, where k is the number of subframes by which U-CC is shifted relative to L-CC, and 0<=k<10. The value for k can depend on criteria such as network conditions, channel conditions, etc.

In embodiments for which the scheduling serving cell is TDD on the L-CC, if the uplink/downlink configurations of at least two serving cells on the L-CC and the U-CC are different, then the uplink reference uplink/downlink configuration for PUSCH scheduling timing may be given according to a specification of the 3GPP family of specifications. For example, the uplink configuration may be given according to Table 8-0A of 3GPP Technical Specification (TS) 36.213, release 12 or later. Additionally, the LTE 102 will adjust the corresponding PUSCH transmission in sub frame $n+4+k$ where $k$ is as described above for FDD embodiments.

With respect to CSI-RS transmission, un-synchronized frame embodiments are similar to synchronized frame embodiments for Type 1 CSI-RS transmission. However, with respect to Type 2 CSI-RS transmission, the scheduling serving cell acts as a subframe reference. Subframes containing CSI-RS will be subframe-aligned with L-CC subframes satisfying Equation (1):

$$(10 n_f + \left\lfloor \frac{n_s}{2} \right\rfloor - k - \Delta_{CSI-RS}) \bmod T_{CSI-RS} = 0 \qquad (1)$$

where $T_{CSI-RS}$ is the subframe configuration period for CSI-RS and $\Delta_{CSI-RS}$ is the subframe offset for the occurrence of CSI-RS, $n_f$ is the system frame number, $n_s$ is the slot number within a radio frame, and k is the subframe shifting between U-CC and L-CC, wherein 0<=k<10.

LAA notification signal transmission in un-synchronized frame embodiments is the same or similar to LAA start notification signal transmission for synchronized frame embodiments.

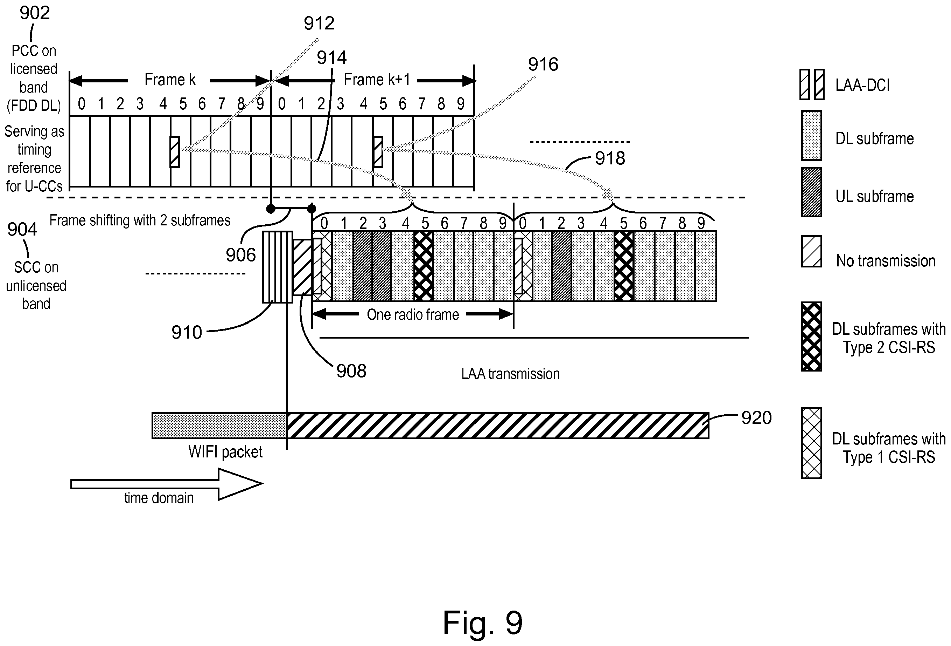

FIG. 9 illustrates an example LAA frame structure for uplink transmissions, to illustrate un-synchronized frame timing among aggregated component carriers in accordance with some embodiments. However, embodiments are not limited to the particular signals illustrated, or to the order or configuration of signals shown in FIG. 9.

In FIG. 9, the PCC 902 on a licensed band operates as the scheduling serving cell for the SCC 904 operating on an unlicensed band. Frames are shifted at 906. In the illustrated example, frames are shifted by 2 subframes (i.e., k=2). The LAA validation period and LAA start notification signal will be similar to that described with respect to FIG. 8. A busy signal 908, CCA operation 910, and other signals such as DL subframes with Type 1 CSI-RS, Type 2 CSI-RS can also be present.

Uplink and downlink subframes will be as configured according to uplink/downlink configuration received in LAA-DCI. For example, an uplink/downlink configuration 912 configures uplink and downlink subframe assignments 914 in one radio frame whereas an uplink/downlink configuration 916 configures uplink and downlink subframe assignments 918 in the next subframe. The uplink/downlink configuration 912 may be either different or the same as the uplink/downlink configuration 916. The uplink/downlink configurations 912 and 916 can be defined in a specification of the 3GPP family of specification or other wireless specification, and the uplink/downlink configurations 912 and 916 can be assigned numbers, such as those described above with respect to FIG. 7. For example, the uplink/downlink configuration 912 can be assigned configuration "4" such that configuration "4" means that subframes 2 and 3 are to be uplink subframes, while the rest of the subframes are to be downlink subframes, in the corresponding U-CC radio frame. Uplink/downlink configuration 916 can be assigned configuration "5" wherein configuration "5" signifies that subframe 2 is to be an uplink subframe and other subframes are to be downlink subframes in the corresponding U-CC radio frame. However, embodiments are not limited to only two different configurations, or to any particular definition or assignment of configurations.

Graph 920 illustrates that WiFi transmissions can occur on the U-CC before the eNB 104 grabs the U-CC. Between those points, LAA communications in accordance with various embodiments will occur using the U-CC.

*Flexible Frame Structure for LAA operation on U-CCs*

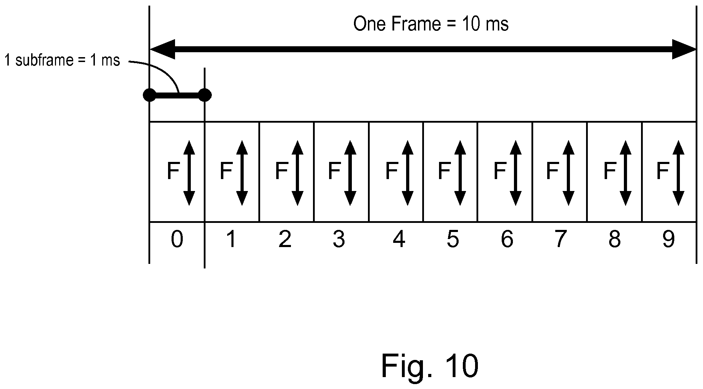

In some embodiments, in a given radio frame, each subframe is flexible for either uplink or downlink transmission depending on a scheduling grant or assignment received by the UE 102. One example flexible frame structure is shown in FIG. 10.

Embodiments for flexible frame make use of reference configurations wherein a UE 102 supporting LAA is configured with two separate reference configurations. These two separate reference configurations can include either an FDD or a TDD uplink and downlink configuration. The uplink configuration is then applied for uplink scheduling for PUSCH on U-CCs while the downlink configuration is applied for PDCCH monitoring and DL scheduling.

The transmission direction of a flexible frame can be indicated implicitly by the scheduling grant/assignment and is in the control of the scheduler. An UL grant means that the corresponding subframe is UL. A DL assignment means that the subframe is DL. A non-scheduled subframe is unknown from the UE 102 perspective.

Similarly to some embodiments described earlier herein, a UE 102 will need to be timely informed to suspend scheduled PUSCH transmission if the eNB 104 could not grab the U-CC. Furthermore, and similarly to other issues described earlier herein, non-scheduled UEs 102 will need to know if a flexible frame is scheduled for downlink in order to perform CSI measurement for LAA. The LAA notification signal design proposed in synchronized frame embodiments described above can be used with flexible frame embodiments to address these and other concerns. Specifically, the Type 1 CSI-RS is always deterministically present for CSI-RS measurement as Type 1 CSI-RS is located in the LAA start notification signal subframe. The LAA start notification signal can be used as an aid to inform the UE 102 of the Type 1 CSI-RS subframe position so that the UE 102 can properly derive CSI estimation. If Type-2 CSI-RS is configured and the UE 102 is scheduled for DL reception at that subframe, the UE 102 can use the Type-2 CSI-RS to conduct CSI measurement as well.

*CSI Measurement Resources*

Multiple-input and multiple-output (MIMO) antenna deployments, available in some revisions of LTE, can offer increased spectral efficiency by allowing for transmission of a greater number of bits per second per Hertz of bandwidth. MIMO deployments can also help improve link reliability and diversity. Some MIMO techniques available in LTE include transmission mode (TM) switching, rank adaption and rate adaption, among other techniques. These and other MIMO techniques make use of periodic or aperiodic CSI feedback from a LTE 102 to an eNB 104.

CRS was introduced in LTE Release 8 to allow a LTE 102 to acquire CSI. CRS is typically transmitted by an eNB 104 in every DL subframe and in every resource block (RB) in the frequency domain. The UE 102 can also use CRS for channel estimation for coherent demodulation of any DL physical channel except for PMCH and for PDSCH in the case of transmission mode 7, 8, 9 or 10.

CSI-RS was introduced in LTE Release 10, to target CSI for uses cases in which the UE 102 uses demodulation reference signals for channel estimation. Compared to CRS, CSI-RS was designed with lower time/frequency density in order to reduce overhead. For example, a CSI overhead of 0.12% per antenna port is typical in most systems, compared with a CRS overhead of 4.76% for one antenna port. CSI-RS was also designed in LTE Release 10 to support up to eight layers downlink spatial multiplexing. Unlike CRS transmission, CSI-RS may be transmitted on a configurable set of resource elements (REs) within a subframe, defined by the CSI-RS configuration, which can be referred to in some specifications of the 3GPP LTE family of specifications as resourceConfig. Further, the CSI-RS can be transmitted with a given periodicity (i.e. ranging from a periodicity of every 5 ms to 80 ms) and at an offset defined by the parameter $I_{CSI\_RS}$ (subframe Config), covering the entire system bandwidth. While some example parameter names and values are given, it will be appreciated that embodiments are not limited thereto, and that parameter names and values can be adapted with future releases of LTE standards or other standards. Further, the subframes for CRS and CSI-RS transmission are deterministic and are known to the UE 102 for CSI measurement algorithms and configurations.

CSI-RS can be extended for use with LAA. As described in earlier sections herein, LAA can allow mobile operators to benefit from the additional capacity available from the unlicensed spectrum, particularly in hotspots and corporate environments. With LAA, the extra spectrum resource, especially on the 5 GHz frequency band, can complement licensed band LTE operation as an SCC integrated into LTE to boost capacity while still ensuring end user quality of service.

As the 5 GHz unlicensed spectrum is currently being used by commercial, enterprise and private WiFi networks, in addition to other incumbents, operators should ensure coexistence with incumbents on a fair and friendly basis. Additionally, regulatory authorities in various jurisdictions have defined steps and operations which are to be performed by operators wishing to use unlicensed bands. As an example, operators are to comply with or implement Clear Channel Assessment (CCA) or Listen-Before-Talk (LBT) in some regions before using unlicensed bands. Transmitters are expected to sense the medium and make sure it is clear before starting transmission. The goal of this type of algorithm is to provide coexistence across different radio access technologies (RATs) in a time-division multiplex fashion.

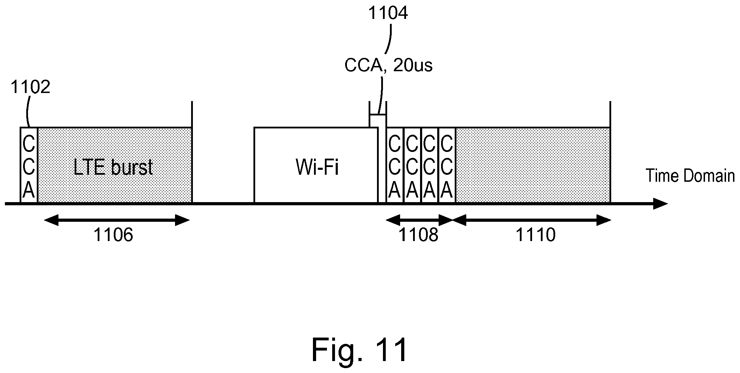

FIG. 11 illustrates a use of listen-before-talk (LBT) to enable LTE and WiFi operators to share a same channel on unlicensed spectrum in accordance with some embodiments.

As shown in FIG. 11, CCA 1102 is performed by LTE operators before LTE transmissions on the unlicensed spectrum. After LTE transmissions, if WiFi transmissions occur, additional CCA 1104 is performed, after which the LTE operator will wait a period, for example 20 microseconds. Extended CCA is then performed at 1108 to ensure the channel is clear before the LTE operator occupies the channel at 1110. The time duration of 1110 may be limited in some jurisdictions. For example, in Japan, the time duration of 1110 may be limited to 4 milliseconds.

CSI-RS mechanisms can be extended for use in unlicensed spectra with some modifications. For instance, CSI-RS transmission on licensed spectra is "always-on" in the configured CSI-RS subframes. However, because operators on unlicensed spectra are to comply with LBT/CCA operation and limited maximum continuous duration specifications, operators cannot periodically transmit CSI-RS in preconfigured subframes in unlicensed spectra. In some cases, CSI-RS may be opportunistically transmitted together with discontinuous LAA burst transmissions when the eNB 104 successfully acquires the channel after performing LBT. However, this can pose challenges to the UE 102 in that CSI measurement mechanisms should notify LAA-enabled UEs, in a timely fashion, of this opportunistic CSI-RS transmission so that LAA-enabled UEs can acquire accurate and realistic CSI information to support appropriate and efficient operation of LAA SCells.

Embodiments provide methods for enabling this notification of LAA-enabled UEs, so that UEs can perform CSI measurement on a LAA serving cell on unlicensed band for support of MIMO techniques for enhanced cell throughput. Embodiments described herein disclose methods for transmitting non-zero power CSI-RS (NZP-CSI-RS), periodically or aperiodically, in an LAA serving cell for UE CSI measurement purposes, and so that the UE can conduct PDSCH rate-matching and apply link adaptation functions in an LAA system.

For a serving cell on unlicensed spectrum, an LAA-enabled UE can be configured with two types of CSI-RS with non-zero transmission power. The following are example parameters for each NZP-CSI-RS are configured independently via higher layer signaling for one or two types of CSI-RS. While certain parameters are listed, it will be appreciated that other parameters can be used in future releases of the LTE standard or other communication standards:

**Table 2: NZP-CSI-RS parameters.**

| Parameter | Notes |
|---|---|
| CSI-RS resource configuration identity | if the UE is configured in transmission mode 10 |
| Number of CSI-RS ports | |
| CSI-RS subframe configuration $I_{CSI-RS}$ | Different for type 1 and type 2 CSI-RS |
| UE assumption on reference PDSCH transmitted power for CSI feedback $P_c$ | If the UE is configured in transmission mode 9 |
| UE assumption on reference PDSCH transmitted power for CSI feedback Pc for each CSI process | Used if the UE is configured in transmission mode 10 |
| Pseudo-random sequence generator parameter, nID | |

In embodiments, an LAA-enabled UE shall assume unicast PDSCH rate matching around the type 1 CSI-RS REs and type 2 CSI-RS REs if the respective CSI-RS is transmitted.

Type 1 CSI-RS resource

Embodiments provide a Type 1 CSI-RS as part of LAA discovery signals. The eNB 104 transmits Type 1 CSI-RS signals periodically (e.g., every 40 ms, 80 ms or 160 ms) on the unlicensed spectrum to enable the UE 102 to discover a LAA system, to acquire fine time/frequency synchronization, and to determine the Transmission Point (TP) identity in shared or non-shared cell ID scenarios. The UE 102 may also use Type 1 CSI-RS signals to perform radio resource management (RRM) measurement and CSI feedback. In other embodiments, the UE 102 may be limited to using the Type 1 CSI-RS resource for CSI measurement of periodic CSI reporting on PUCCH and for RRM measurements.

The eNB 104 may transmit Type 1 CSI-RSs periodically in configurable DL subframes grouped by N consecutive subframes, where N can be 1 or 2 or 4. The value for N can be defined by specification or provided in signaling from higher layers. The eNB 104 may transmit Type 1 CSI-RSs without first performing a CCA/LBT by sensing the shared carrier. Additionally, the presence of type 1 CSI-RS for a given LAA serving cell is configurable by higher layers subject to regional regulations. Type 1 CSI-RS is compatible with most regional regulatory domains except Japan because Type 1 CSI-RS allows for the transmission of low duty cycle control signaling without sensing the channel for the presence of other signals. For example, European Telecommunications Standards Institute (ETSI) regulations allow for a 5% short-control signaling transmission once every 50 ms.

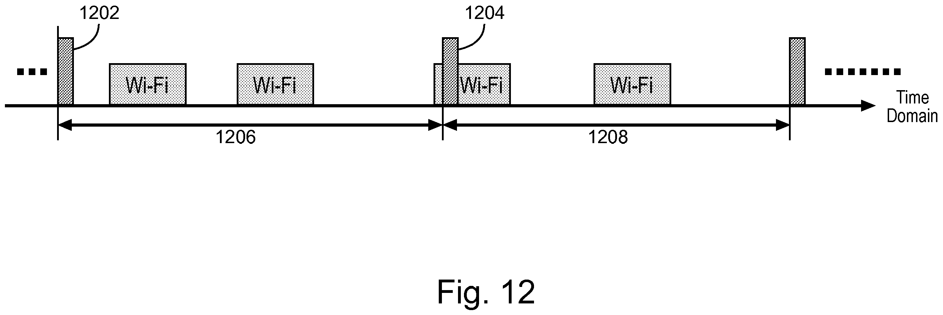

FIG. 12 illustrates a Type 1 CSI-RS transmission on an unlicensed carrier in an LAA system in accordance with some embodiments. In the illustrated example of FIG. 12, N = 1 (e.g., CSI-RS transmission in one consecutive subframe) and T = 40 ms (transmitted periodically every 40 ms). A network node, for example eNB 104, transits Type 1 CSI-RS without CCA or LBT at 1202 in a period 1206 and again at 1204 in a period 1208. Thus, the CSI-RS transmission can collide with an ongoing Wi-Fi signal, for example at 1204.

Type 2 CSI-RS resource

The serving cell specific Type 2 CSI-RS transmission subframes are configured by higher layers. In some embodiments and implementations, these Type 2 CSI-RS transmission subframes can be referred to as target Type 2 CSI-RS transmission times (TCTTs). The allowable values might be different between type 1 and type 2 CSI-RSs.

Unlike Type 1 CSI-RS transmission, Type 2 CSI-RSs are transmitted opportunistically with lower density (e.g. 5 ms, 10 ms or 20 ms) subject to the shared channel being idle after CCA/LBT. In other words, to send a Type 2 CSI-RS, the eNB 104 will first ensure that the shared channel is idle or that the eNB 104 has grabbed the shared channel. Type 2 CSI-RS transmission is either dropped or deferred in a pre-configured DL subframe if the eNB 104 detects the presence of transmission from another RAT (e.g. WiFi) or if the eNB 104 detects other LAA.

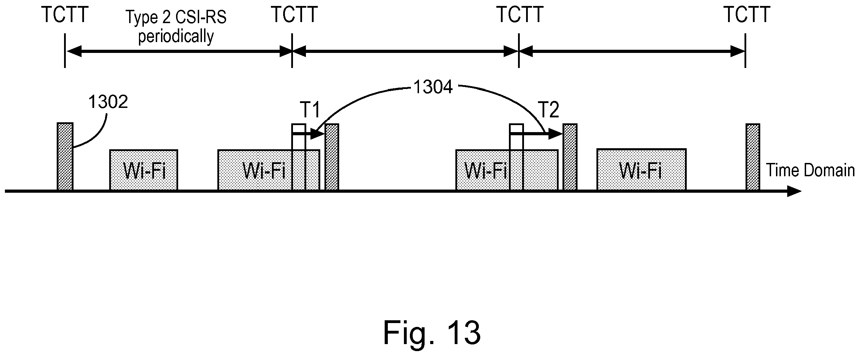

FIG. 13 illustrates a Type 2 of CSI-RS transmission on an unlicensed spectrum in an LAA system in accordance with some embodiments. The eNB 104 transmits type 2 CSI-RS 1302 periodically in each TCTT. Although TCTTs are configured with a fixed period (e.g. 10 ms), Type 2 CSI-RS transmissions are deferred for T1 and T2 duration at 1304 respectively because the shared channel is occupied by WiFi signals at the given TCTT instances.

Because it is uncertain whether a particular Type 2 CSI-RS transmission will be made due to contention-based channel access mechanisms in the unlicensed spectrum, a UE 102 cannot assume that the Type 2 CSI-RS is always present in preconfigured subframes. Instead, the receiving UE 102 should be informed about the presence of Type 2 CSI-RS in a subframe. Accordingly, embodiments provide mechanisms to implicitly or explicitly inform LTEs when a Type 2 CSI-RS will be transmitted by the eNB 104, so that the UE 102 can perform CSI measurement and PDSCH rate matching based on the presence of corresponding Type 2 CSI-RS. Embodiments provide various mechanisms to address timing uncertainty issues for Type 2 CSI-RS.

In a first approach to remedying Type 2 CSI-RS uncertainty, a reservation signal is used to assist Type 2 CSI-RS transmission. In this approach, an LAA eNB 104 reserves the channel for a LAA burst transmission duration using a reservation signal (e.g., a preamble signal), after assessing channel availability with LBT/CCA. The UE 102 detects the start of LAA burst in any subframe by trying to detect the preamble signal. In particular, the eNB 104 transmits length information (among other optional information) for a subsequent LAA data burst within the preamble signal. In addition to length information, the preamble signal can include time/frequency synchronization data and tuning adaptive gain control (AGC).

In embodiments, an $I_{CSI-RS}$ can be configured with jointly encoding periodicity $T_{CSI-RS,2}$ and subframe offset $\Delta_{CSI-RS,2}$ for the occurrence of Type 2 CSI-RSs. $I_{CSI-RS}$ can be configured by the primary cell or transmitted in the preamble. Because subframe boundaries may be aligned across serving cells aggregated by Carrier Aggregation (CA) in LAA systems, subframes containing Type 2 CSI-RS signals may be assumed to satisfy Equation (2):

$$\left(10n_f + \left\lfloor \frac{n_s}{2} \right\rfloor - n_{preamble} - \Delta_{CSI-RS,2}\right) \bmod T_{CSI-RS,2} = 0 \qquad (2)$$

within a given LAA burst, where, $n_{preamble}$ is the subframe index in which the preamble is transmitted, $n_f$ is system frame number and $n_s$ is slot number within a radio frame.

In another embodiment of the invention, $n_{preamble}$ can be fixed in the specification or configured by higher layers.

In one example, $n_{preamble} = 0$, to give Equation (3):

$$\left(10n_f + \left\lfloor \frac{n_s}{2} \right\rfloor - \Delta_{CSI-RS,2}\right) \bmod T_{CSI-RS,2} = 0 \qquad (3)$$

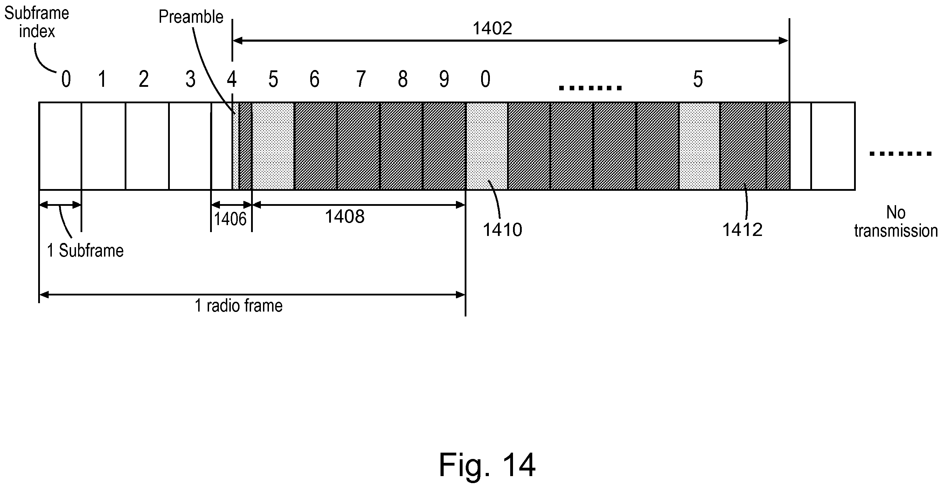

FIG. 14 illustrates a first approach for the second type of CSI-RS transmission illustrated in FIG. 13, in accordance with some embodiments. In the illustrative example of FIG. 14, one preamble is detected at subframe 4 (i.e., $n_{preamble}$= 4 ) and LAA burst length 1402 is set to 13 ms in the detected preamble. In addition, it assumes that the $I_{CSI-RS}$ =2 is configured by higher layers for a given LAA-enabled UE 102, which indicates that $T_{CSI-RS,2}$ = 5 (as shown at reference numeral 1408) and $\Delta_{CSI-RS,2}$ = 1 (as shown at reference number 1406) as given by 3GPP TS 36.211 Table 6.10.5.3-1. Then, as shown in FIG. 14, Type 2 CSI-RSs are transmitted in subframe #5 in the first radio frame, and in subframe 0 (see reference number 1410) and subframe 5 in the second radio frame within LAA data burst 1402, respectively.

In a second approach to remedying uncertainty issues with Type 2 CSI-RS transmission, embodiments introduce a DCI format to dynamically indicate whether a pre-configured Type 2 CSI-RS is transmitted in a particular subframe or not. An eNB 104 transmits this DCI on an assisting serving cell in an aperiodic manner. In one embodiment, the assisting serving cell is a PCell.

Embodiments can provide one of at least two options for DCI format design. In one option, the DCI information can include an indicator bit or set of bits, (e.g., Type-2 CSI-RS presence indication), to indicate presence of a Type 2 CSI-RS transmission. The DCI can include up to M Type 2 CSI-RS indicator bits, where M is equal to the payload size of format 1C. If the UE 102 detects the new DCI format in subframe m , for each serving cell, a value of 0 indicates that there will be no type-2 CSI transmission in subframe m + $\Delta$ and a value of 1 indicate type 2 CSI-RS transmission in subframe m + $\Delta$ , where $\Delta$ can be fixed by specification or configured by higher layers. One parameter provided by higher layers determines the index to the Type-2 CSI-RS presence indication for an LAA serving cell. Zeros are added for padding to make the DCI size equal to the size of either format 1C (for compact scheduling of one PDSCH codeword) or format 1A (to avoid additional blind decoding). A new RNTI value (e.g., LAA-RNTI), is configured by higher layers to identify the new DCI format and used to scramble the CRC parity bits of the new DCI format.

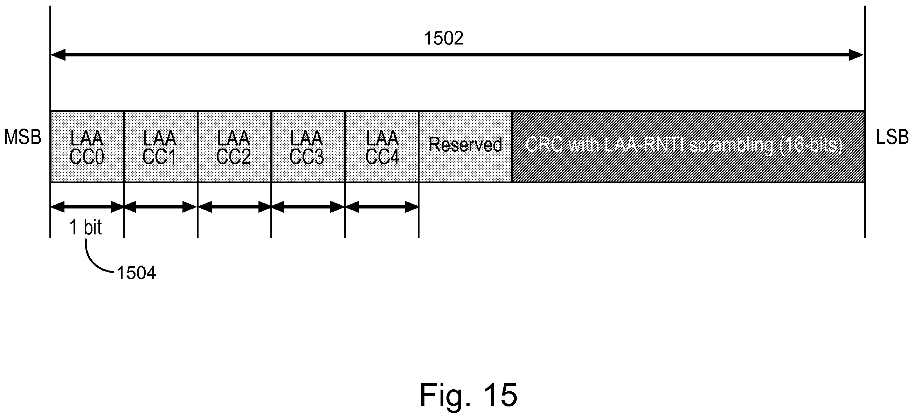

FIG. 15 illustrates a DCI format for carrier aggregation (CA) support in accordance with some embodiments. In the illustrative example, Type 2 CSI-RS indicators 1504 are provided for each of five LAA serving cells. The mapping between an LAA serving cell to the index of the Type 2 CSI-RS presence indication is configured by a higher layer.

If a UE 102 is configured by higher layers to decode PDCCHs with the CRC scrambled by the LAA-RNTI, the UE 102 may decode the PDCCH according to the combination defined in Table 3 or Table 4.

**Table 3: PDCCH configured by LAA-RNTI.**

| DCI format | Search Space |
| --- | --- |
| DCI format 1C or 0 | Common |

**Table 4: PDCCH configured by LAA-RNTI.**

| DCI format | Search Space |
| --- | --- |
| DCI format 1C or 0 | UE-group-common |

Although it may be more efficient in some implementations to transmit PDCCH on the common search space (CSS) to inform the UE 102 of the DL subframes on which to measure CSI, the PDCCH CSS might become congested, because the PDCCH CSS is also used for SIBs, paging, RACH response scheduling and as a backup for dedicated resource assignment. Therefore, some embodiments provide for a new UE-group-common Search Space (Table 4) to help prevent congestion on PDCCH CSS.

For each serving cell on which PDCCH is monitored, the CCEs corresponding to PDCCH candidate m of the UE-group-common search space $S_k^{(L)}$ are given by:

$$L\left\{(Y_k + m)\,\mathrm{mod}\left\lfloor N_{CCE,k/L}\right\rfloor\right\} + i \tag{4}$$

where i = 0,···, L - 1 and where $Y_k$ is defined according to:

$$Y_k = (A \cdot Y_{k-1})\,mod\ D \tag{5}$$

where

$Y_{-1} = n_{RNT1}$ = LAA - $RNT1 \neq 0$, A = 39827, D = 65537 and $k = \lfloor n_s / 2 \rfloor$, $n_s$ is the slot number within a radio frame, m = $0, \cdots, M^{(L)} - 1$. $M^{(L)}$ is the number of PDCCH candidates to monitor in the given search space.

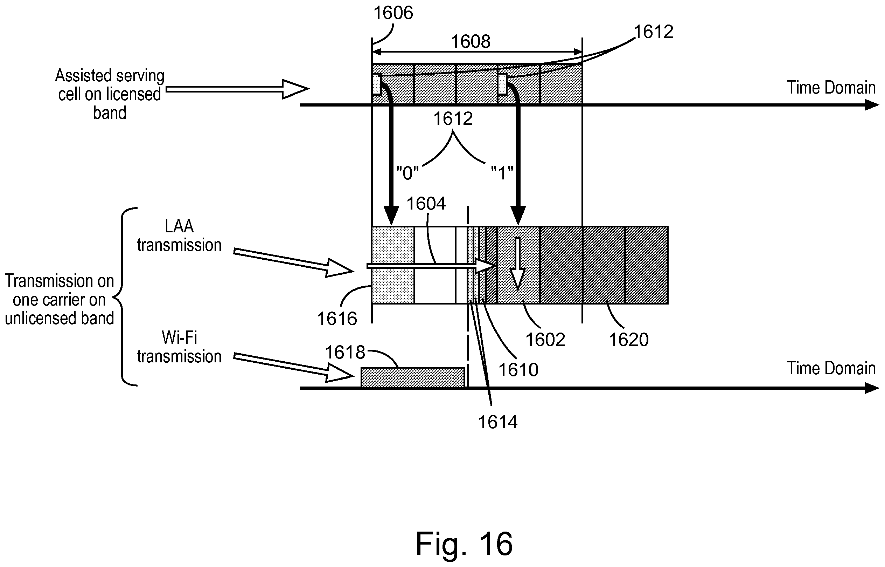

It should be noted that the subframes in which the UE 102 monitoring PDCCH with CRC scrambled by LAA-RNTI are located in a configurable serving cell on licensed spectrum, as illustrated in FIG. 16.

FIG. 16 illustrates a monitoring window for the second type of CSI-RS transmission illustrated in FIG. 13, in accordance with some embodiments. A monitoring window was specified and configured via RRC signaling, which comprises a set of subframes in which UE 102 monitors for PDCCH with CRC scrambled by LAA-RNTI for the Type 2 CSI-RS indication. Each monitoring window starts from a Type 2 CSI-RS subframe configured by a higher layer. The UE 102 will monitor all DL subframes within a configurable monitoring window at least until one Type 2 CSI-RS transmission is detected.

In various embodiments, the window size X may be fixed in specification, while in other embodiments the window size X may be configurable based on Type 2 CSI-RS periodicity. Based on the window size X, the UE 102 can monitor PDCCH with CRC scrambled by LAA-RNTI in a limited number of subframes as given by:

$$\{n_{CSI-RS,2}, n_{CSI-RS,2} + 1, n_{CSI-RS,2} + 2, \cdots, n_{CSI-RS,2} + X - 1\} \qquad (6)$$

where $0 \leq X < T_{CSI-RS,2}$, $n_{CSI-RS,2}$ is the preconfigured subframes for Type 2 CSI-RS transmission satisfying Equation (3) discussed earlier herein, and $T_{CSI-RS,2}$ and $\Delta_{CSI-RS,2}$ are configured by higher layers for Type 2 CSI-RS as mentioned earlier herein. More specially, when X is set to 0 ms, the UE 102 only monitors the type 2 CSI-RS subframes (i.e. configured by higher layers) for the PDCCH with CRC scrambled by LAA-RNTI. This implies that a given Type 2 CSI-RS would be dropped by an eNB 104 if the shared channel in the configured CSI-RS subframes is sensed as busy with LBT/CCA operation. Using other values for X allows the eNB 104 to defer the suspended Type 2 CSI-RS transmission until the end of monitoring window.

As shown in FIG. 16, the type 2 CSI-RS transmission 1602 is deferred three subframes 1604 from the start of the periodic type 2 CSI-RS subframe 1606 as configured by a higher layer, subject to LBT/CCA requirement. As shown in FIG. 16, the monitoring window 1608 is five subframes.

In the example illustrated in FIG. 16, assuming the burst length of LAA data transmission is indicated by preamble 1610, there is no need to transmit the new DCI format 1612 to indicate the absence of configured Type 2 CSI-RS (e.g. the first new DCI format transmission 1612 instance in FIG. 16) because Type 2 CSI-RS is designed to transmit as part of an LAA burst. CCA transmissions 1614 will precede the preamble 1610 for type 2 CSI-RS transmissions. No LAA transmission will take place in 1616, and instead WiFi transmissions 1618 can take place during that period. At 1620, other LAA transmissions can take place on the unlicensed band.

In one embodiment, unlike type 1 CSI-RS, CSI-RS subframe configuration $I_{CSI-RS}$ is not configured via higher layer signaling for type 2 CSI-RS. Instead, a Type 2 CSI-RS is dynamically transmitted by the network in an aperiodic manner within an LAA burst. The new DCI format is used to timely inform UE 102 once aperiodic type 2 CSI-RS transmission incurs. Although this option allows for full flexibility in terms of the resources used for type 2 CSI-RS transmission, the UE 102 may be forced to monitor PDCCH with CRC scrambled by LAA-RNTI in each DL subframe within a given LAA burst. In the worst case, if the LAA burst length is unknown to the LTE 102, the UE 102 will blindly detect the new DCI format in each DL subframe in the assisting serving cell. This blind detection is undesirable because of large power draws needed at the UE 102 to perform blind detection of large numbers of subframes.

In a second option for DCI format design, the Type 2 CSI-RS presence field is padded on the existing DL DCI formats for indication of Type 2 CSI-RS presence, which is transmitted in a UE-specific Search Space (USS) of PDCCH. As with the first option for DCI format design described earlier herein, if the UE 102 detects the new DCI format in subframe m, for each serving cell, a value 0 indicates that no Type 2 CSI transmission will be made in subframe m+$\Delta$ and a value of 1 indicates that a Type 2 CSI-RS transmission will be made in subframe m+$\Delta$, where $\Delta$ can be fixed in specification or configured by higher layers. For example, $\Delta$ may be set to 0 or 1 or other natural number.

CSI Interference management resource

In some embodiments, for a single LAA serving cell, a UE 102 can be configured with one or more CSI processes. For example, a UE 102 can be associated with the above-described NZP-CSI-RS (e.g., either type 1 CSI-RS or type 2 CSI-RS, respectively as described earlier herein) and, additionally, the UE 102 can be configured with a CSI-interference measurement (CSI-IM) resource. The UE 102 can derive channel measurements for feedback to the eNB 104 based on the NZP-CSI-RS and derive the interference measurements based on paired CSI-IM resources for computing CQI values corresponding to a CSI process.

In one embodiment, for an LAA serving cell, the paired CSI-IM resource and NZP-CSI-RS resource for one CSI process are configured in the same subframe by higher layer signaling, (e.g., a CSI process resource). For instance, an NZP-CSI-RS configuration and the paired CSI-IM may share the same parameter $I_{CSI-RS}$. In addition, all the aforementioned methods to derive the NZP-CSI-RS resource are simply extended for deriving the appropriate CSI-process resource, including not only NZP-CSI-RS resource but also the paired CSI-IM resource.

In another embodiment, a Type 2 CSI process may be defined to dynamically indicate presence of an NZP CSI-RS resource associated with the CSI process for channel measurements and CSI-IM resource associated with CSI process for interference measurements. The DCI-based or preamble-based approach described above may be used for such dynamic indication.

*Devices for Implementing Example Embodiments*

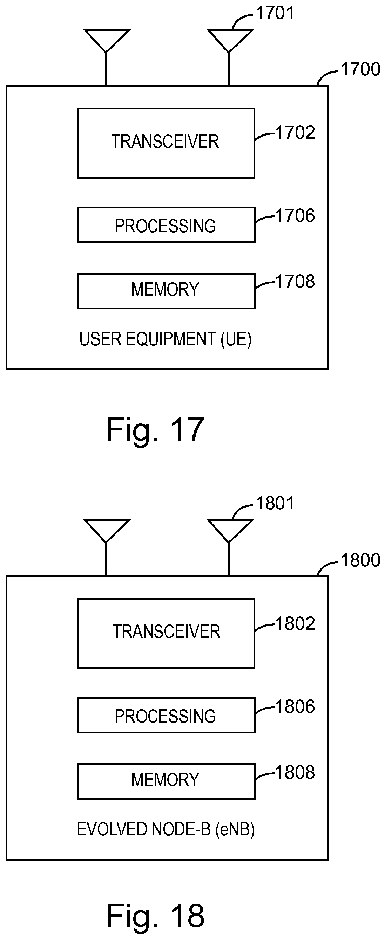

FIG. 17 is a functional diagram of a UE 1700 in accordance with some embodiments, while FIG. 18 is a functional diagram of an eNB 1800 in accordance with some embodiments. It should be noted that in some embodiments, the eNB 1800 may be a stationary non-mobile device. The UE 1700 perform any or all of the operations described herein of the UE 102 as depicted in FIG. 1, while the eNB 1800 may perform any or all of the operations described herein of the eNB 104 as depicted in FIG. 1.

The UE 1700 will include transceiver circuitry 1702 for transmitting and receiving signals to and from the eNB 1800, other Node-Bs or eNBs, other UEs or other devices using one or more antennas 1701, while the eNB 1800 will include transceiver circuitry 1802 for transmitting and receiving signals to and from the UE 1700, other eNBs or Node-Bs, other UEs or other devices using one or more antennas 1801. The UE 1700 also includes hardware processing circuitry 1706 and memory 1708 arranged to perform the operations described herein, and the eNB 1800 also includes hardware processing circuitry 1806 and memory 1808 arranged to perform the operations described herein. The processing circuitry 1706 and 1806 can include PHY, MAC, RRC and/or any other protocol sublayers.

In one embodiment, the transceiver circuitry 1702 receives an uplink/downlink configuration, from an eNB 1800 operating on a first serving cell, for a U-CC operating on a second serving cell. The uplink/downlink configuration was described earlier herein with reference to, for example, FIG. 2. As described earlier herein, the uplink/downlink configuration indicates, for radio frames transmitted on the second serving cell, which subframes are to be used for uplink transmissions and which subframes are to be used for downlink transmissions. In embodiments, the first serving cell may deployed on a licensed band, with at least one PCC. In embodiments, the UE 1700 can operate on two or more U-CCs operating on two or more separate serving cells.

The uplink/downlink configuration may be included within a DCI message that has been scrambled using an RNTI that has been specified for use by the UE 1700 for LAA communications. The DCI message may indicate which of these two or more serving cells are enabled for LAA. For example, a bitmap may be used to indicate the on/off state of LAA of each serving cell as described above with respect to FIG. 2. The number of bits used for this bitmap may be specified in a standard of the 3GPP family of standards or by higher-layer signaling. The DCI message can further include two or more sets of uplink/downlink configuration that include separate and distinct uplink/downlink configurations for each serving cell on which the UE 1700 is configured to operate. The UE may perform blind decoding of a PDCCH on the first serving cell in a common search space (CSS).

The transceiver circuitry 1702 can receive a signal from the eNB 104 to notify the UE of a location on which to detect a CSI-RS for use in measuring CSI values. The CSI-RS was described earlier herein with respect to FIG. 11-16. As was also discussed earlier herein, the CSI-RS can include a non-zero power CSI-RS (NZP-CSI-RS), or a zero-power CSI-RS (ZP-CSI-RS) in some embodiments. The NZP-CSI-RS can include either a Type 1 NZP-CSI-RS, which is received in a subframe that includes an LAA start notification signal or a Type 2 NZP-CSI-RS, which is received periodically. Either type of NZP-CSI-RS can be paired with a CSI-IM resource as described earlier herein. Additionally, either type of NZP-CSI-RS can have associated therewith one or more parameters as described above with respect to Table 2, or any other parameters or values as can be used by the UE for CSI measurement on the unlicensed spectrum. In embodiments, these parameters can include, by way of non-limiting example, a CSI-RS resource identity, number of CSI-RS ports, CSI-RS subframe configuration, UE assumption on reference PDSCH transmitted power for CSI feedback or UE assumption on reference PDSCH transmitted power for CSI feedback for each CSI process, Pseudo-random sequence generator parameter, etc. The CSI-RS subframe configuration can include a periodicity configuration, wherein the periodicity configuration corresponding to a Type 1 CSI-RS is larger than the periodicity corresponding to a Type 2 CSI-RS.

The processing circuitry 1706 may measure CSI values based on downlink communications as described earlier herein with reference to, for example, FIG. 4. The UE processing circuitry 1706 may also instruct the transceiver circuitry 1702 to communicate on a PUSCH of the second serving cell, within subframes of radio frames of the second serving cell as indicated in the uplink/downlink configuration, responsive to receiving a LAA start notification signal from the eNB 1800 within a notification period subsequent to receiving the uplink/downlink configuration. The LAA start notification signal and notification period were described earlier herein with reference to FIGs. 4-8. For example, the transceiver circuitry 1702 may receive the LAA start notification signal periodically, and the processing circuitry 1706 may suppress PUSCH communications if the LAA start notification signal is not received within the notification period. Furthermore, the LAA start notification signal can include an indication of a starting subframe at which the UE is to begin to measure the CSI values on signals of the second serving cell.

The transceiver circuitry 1802 can transmit, on a PDCCH on a first serving cell deployed on a licensed channel, an uplink/downlink configuration for a U-CC operating on a second serving cell that indicates, for radio frames transmitted on the second serving cell, which subframes are to be used for uplink transmissions and which subframes are to be used for downlink transmissions. The transceiver circuitry 1802 can also transmit an LAA start notification signal on the second serving cell, subsequent to transmitting the uplink/downlink configuration on the first serving cell, to notify a UE 1700 to schedule PUSCH communications using the second serving cell. As described earlier herein with reference to at least FIG. 3, the eNB 1800 can perform CCA on the second serving cell before transmitting the LAA start notification signal. The transceiver circuitry 1802 may transmit the LAA start notification signal periodically or aperiodically.

In embodiments, the eNB processing circuitry 1806 determine whether to update the uplink/downlink configuration. In embodiments, the processing circuitry 1806 can make this determination based on network conditions, received CSI measurements, etc.

The antennas 1701, 1801 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 1701, 1801 may be effectively separated to take advantage of spatial diversity and the different channel characteristics that may result.

Although the UE 1700 and eNB 1800 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

*Example method for LAA operation*

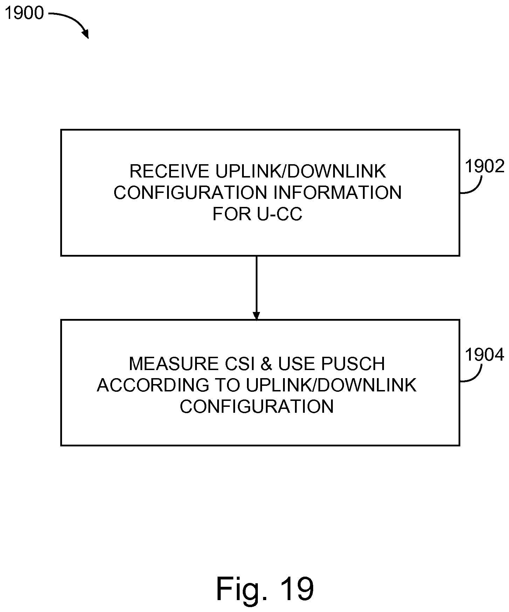

Referring to FIG. 19 an example method 1900 is shown, which can be performed by a UE 1700 (FIG. 17) for LAA operation. It is important to note that embodiments of the method 1900 may include additional or even fewer operations or processes in comparison to what is illustrated in FIG. 19. In addition, embodiments of the method 1900 are not necessarily limited to the chronological order that is shown in FIG. 19. In describing the method 1900, reference may be made to FIGs. 1-18, although it is understood that the method 1900 may be practiced with any other suitable systems, interfaces and components.

In addition, while the method 1900 and other methods described herein may refer to eNBs 104 or 1800, or to UEs 102 and 1700 operating in accordance with 3GPP or other standards, embodiments of those methods are not limited to just those eNBs and UEs, and may also be practiced on other mobile devices, such as a Wi-Fi access point (AP) or user station (STA). Moreover, the method 1900 and other methods described herein may be practiced by wireless devices configured to operate in other suitable types of wireless communication systems, including systems configured to operate according to various IEEE standards such as IEEE 802.11.

At operation 1902, the UE 1700 may receive, from an eNB 1800 on a first serving cell, an uplink/downlink configuration for a U-CC operating on a second serving cell that indicates, for radio frames transmitted on the second serving cell, which subframes are to be used for uplink transmissions and which subframes are to be used for downlink transmissions. As described earlier herein, the uplink/downlink configuration may be included within a DCI message that has been scrambled using an LAA RNTI. The example method can further include communicating on two or more U-CCs operating on two or more separate serving cells, wherein the DCI message indicates which of the two or more serving cells are enabled for LAA.

In operation 1904, the UE 1700 may measure CSI values based on downlink communications and communicate on a PUSCH of the second serving cell, within subframes of radio frames of the second serving cell as indicated in the uplink/downlink configuration, responsive to receiving an LAA start notification signal from the eNB 1800 within a notification period subsequent to receiving the uplink/downlink configuration. The LAA start notification signal may be received periodically or aperiodically. The UE 1700 may suppress PUSCH communications if the LAA start notification signal is not received within the notification period.

A non-transitory computer-readable storage medium that stores instructions for execution by one or more processors to perform operations supporting multi-band signaling in a network is disclosed herein. The operations may configure the one or more processors to receive, from an eNB on a first serving cell, an uplink/downlink configuration for a U-CC operating on a second serving cell that indicates, for radio frames transmitted on the second serving cell, which subframes are to be used for uplink transmissions and which subframes are to be used for downlink transmissions; and to measure CSI values based on downlink communications, and communicate on a PUSCH of the second serving cell, within subframes of radio frames of the second serving cell as indicated in the uplink/downlink configuration, responsive to receiving an LAA start notification signal from the eNB within a notification period subsequent to receiving the uplink/downlink configuration.

*Example Methods for CSI-RS*

In addition to the above-described general example methods for LAA operation, the UE 1700 (FIG. 17) or eNB 1800 (FIG. 18) can perform example methods for any of the operations transmitting, receiving, and using Type 1 or Type 2 CSI-RS as described with reference to FIGs. 11-16. In addition, while methods described herein may refer to eNBs 104 or 1800, or to UEs 102 and 1700 operating in accordance with 3GPP or other standards, embodiments of those methods are not limited to just those eNBs and UEs, and may also be practiced on other mobile devices, such as a Wi-Fi access point (AP) or user station (STA). Moreover, the methods described herein may be practiced by wireless devices configured to operate in other suitable types of wireless communication systems, including systems configured to operate according to various IEEE standards such as IEEE 802.11.

Example methods for CSI-RS can comprise operations of transmitting or receiving a Type 1 NZP-CSI-RS signal having one or more parameters. The Type 1 NZP-CSI-RS may be transmitted or received before a CCA or LBT operation has been performed. In embodiments, example methods can include transmitting or receiving a Type 2 NZP-CSI-RS signal after a CCA or LBT operation has been performed. In the case of either a Type 1 or a Type 2 NZP-CSI-RS, the parameters can include one or more parameters selected from a group including: CSI-RS resource identity, number of CSI-RS ports, CSI-RS subframe configuration, UE assumption on reference PDSCH transmitted power for CSI feedback or UE assumption on reference PDSCH transmitted power for CSI feedback for each CSI process, and a pseudo-random sequence generator parameter. The CSI-RS subframe configuration can include a periodicity configuration. The periodicity of the Type 1 NZP-CSI-RS may be larger than the periodicity of the Type 2 NZP-CSI-RS.

In some embodiments, mobile devices or other devices described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device or wearable device that may receive and/or transmit information wirelessly. In some embodiments, the mobile device or other device can be a User Equipment (UE) or an Evolved Node-B (eNB) configured to operate in accordance with 3GPP standards. In some embodiments, the mobile device or other device may be configured to operate according to other protocols or standards, including IEEE 802.11 or other IEEE standards. In some embodiments, the mobile device or other device may include one or more of a keyboard, a display, a non-volatile memory port, multiple antennas, a graphics processor, an application processor, speakers, and other mobile device elements. The display may be an LCD screen including a touch screen.

**Claims**

1. User Equipment, UE, (102) comprising:

    transceiver circuitry (1702) configured to:

        receive, from a base station (104) on a first serving cell, an uplink/downlink configuration for an unlicensed component carrier, U-CC, operating on a second serving cell that indicates, for radio frames transmitted on the second serving cell, which subframes are to be used for uplink transmissions and which subframes are to be used for downlink transmissions;
        receive a signal from the base station (104) to notify the UE of a location on which to detect a CSI reference signal, CSI-RS, for use in measuring CSI values; and

processing circuitry (1706) configured to measure channel state information, CSI, values based on downlink communications and to instruct the transceiver circuitry to communicate on a physical uplink shared channel, PUSCH, of the second serving cell, within subframes of the second serving cell as indicated in the uplink/downlink configuration, responsive to receiving a licensed assisted access, LAA, start notification signal (502) from the base station subsequent to receiving the uplink/downlink configuration,
wherein the LAA start notification signal indicates the start of a validation period (508);
wherein the UE is further configured to transmit during the validation period according to the uplink/downlink configuration; and
wherein:
the CSI-RS includes one of a non-zero power CSI-RS, NZP- CSI-RS, and a zero-power CSI-RS, ZP-CSI-RS, and wherein the NZP-CSI-RS includes one of a Type 1 NZP-CSI-RS, which is received in a subframe that includes the LAA start notification signal (502) and a Type 2 NZP-CSI-RS, which is received periodically.

2. The UE (102) of claim 1, wherein the LAA start notification signal (502) further includes an indication of a starting subframe at which the UE is to begin to measure CSI values on signals of the second serving cell.

3. The UE (102) of any one of claims 1-2, wherein the uplink/downlink configuration is included within a downlink control information, DCI, message that has been scrambled using a Radio Network Temporary Identifier, RNTI, that has been specified for use by the UE for LAA communications.

4. The UE (102) of claim 3, wherein the processing circuitry (1706) is configured to operate on two or more U-CCs operating on two or more separate serving cells, and wherein the DCI message indicates which of the two or more separate serving cells are enabled for LAA.

5. The UE (102) of any one of claims 1-4, wherein the transceiver circuitry (1702) is configured to receive the LAA start notification signal (502) periodically, and wherein the processing circuitry (1706) is configured to suppress PUSCH communications if the LAA start notification signal is not received within a notification period.

6. The UE (102) of any one of claims 1-5, wherein the processing circuitry (1706) is configured to: perform blind decoding of a physical downlink control channel, PDCCH, on the first serving cell in a common search space, CSS.

7. The UE (102) of any one of claims 1-6, further comprising two or more antennas (1701).

8. A non-transitory computer-readable storage medium that stores instructions for execution by one or more processors to cause a user equipment, UE, (102) to:

receive, from a base station (104) on a first serving cell,

an uplink/downlink configuration for an unlicensed component carrier, U-CC, operating on a second serving cell that indicates, for radio frames transmitted on the second serving cell, which subframes are to be used for uplink transmissions and which subframes are to be used for downlink transmissions;
receive a signal from the base station (104) to notify the UE of a location on which to detect a CSI reference signal, CSI-RS, for use in measuring CSI values; and

measure channel state information, CSI, values based on downlink communications and further based on the CSI-RS, and communicate on a physical uplink shared channel, PUSCH, of the second serving cell, within subframes of the second serving cell as indicated in the uplink/downlink configuration, responsive to receiving a licensed assisted access, LAA, start notification signal from the base station subsequent to receiving the uplink/downlink configuration, wherein the LAA start notification signal indicates the start of a validation period (508), and
transmit during the validation period according to the uplink/downlink configuration,
wherein:
the CSI-RS includes one of a non-zero power CSI-RS, NZP- CSI-RS, and a zero-power CSI-RS, ZP-CSI-RS, and wherein the NZP-CSI-RS includes one of a Type 1 NZP-CSI-RS, which is received in a subframe that includes the LAA start notification signal (502) and a Type 2 NZP-CSI-RS, which is received periodically.

9. The non-transitory computer-readable storage medium of claim 8, wherein the uplink/downlink configuration is included within a downlink control information, DCI, message that has been scrambled using a LAA Radio Network Temporary Identifier, RNTI, and wherein the instructions further cause the UE (102) to:
communicate on two or more U-CCs operating on two or more separate serving cells, wherein the DCI message indicates which of the two or more serving cells are enabled for LAA.

10. The non-transitory computer-readable storage medium of any one of claims 8-9, wherein the LAA start notification signal (502) is received periodically, and wherein the instructions further cause the UE (102) to suppress PUSCH communications if the LAA start notification signal is not received within a notification period.

11. The non-transitory computer-readable storage medium of any one of claims 8-10, wherein the instructions further cause the UE (102) to:
perform blind decoding of a physical downlink control channel, PDCCH, on the first serving cell in a common search space, CSS.

12. The non-transitory computer-readable storage medium of any of claims 8-11, wherein the first serving cell is deployed on a licensed channel.

13. The non-transitory computer-readable storage medium of any one of claims 8-12, wherein the LAA start notification signal (502) includes one of a primary synchronization signal, PSS, and a secondary synchronization signal, SSS.

**Patentansprüche**

1. Benutzergerät, UE, (102), umfassend:
eine Sendeempfängerschaltung (1702), die konfiguriert ist zum:

Empfangen, von einer Basisstation (104) auf einer ersten bedienenden Zelle, einer Uplink/Downlink-Konfiguration für einen unlizenzierten Komponententräger, U-CC,
der auf einer zweiten bedienenden Zelle arbeitet, die für Funkrahmen, die auf der zweiten bedienenden Zelle übertragen werden, angibt, welche Unterrahmen für Uplink-Übertragungen zu verwenden sind und welche Unterrahmen für Downlink-Übertragungen zu verwenden sind;
Empfangen eines Signals von der Basisstation (104), um das UE über einen Ort zu benachrichtigen, an dem ein CSI-Referenzsignal, CSI-RS, zur Verwendung beim Messen von CSI-Werten zu detektieren ist; und
eine Verarbeitungsschaltung (1706), die konfiguriert ist zum Messen von Kanalzustandsinformations-, CSI-, Werten basierend auf Downlink-Kommunikationen und zum Anweisen der Sendeempfängerschaltung zum Kommunizieren auf einem gemeinsam genutzten physikalischen Uplink-Kanal, PUSCH, der zweiten bedienenden Zelle innerhalb von Unterrahmen der zweiten bedienenden Zelle, wie in der Uplink/Downlink-Konfiguration angegeben, als Reaktion auf das Empfangen eines Startbenachrichtigungssignals (502) für lizenzierten unterstützten Zugriff, LAA, von der Basisstation nach dem Empfangen der Uplink/Downlink-Konfiguration,
wobei das LAA-Startbenachrichtigungssignal den Start einer Validierungsperiode (508) angibt;
wobei das UE ferner konfiguriert ist zum Übertragen während der Validierungsperiode gemäß der Uplink/Downlink-Konfiguration; und
wobei:
das CSI-RS eines von einem Nicht-Null-Leistungs-CSI-RS, NZP-CSI-RS, und einem Null-Leistungs-CSI-RS, ZP-CSI-RS, umfasst, und wobei das NZP-CSI-RS eines von einem Typ-1-NZP-CSI-RS, das in einem Unterrahmen empfangen wird, der das LAA-Startbenachrichtigungssignal (502) umfasst, und einem Typ-2-NZP-CSI-RS, das periodisch empfangen wird, umfasst.

2. UE (102) nach Anspruch 1, wobei das LAA-Startbenachrichtigungssignal (502) ferner eine Angabe eines Startunterrahmens umfasst, an dem das UE beginnen soll, CSI-Werte an Signalen der zweiten bedienenden Zelle zu messen.

3. UE (102) nach einem der Ansprüche 1-2, wobei die Uplink/Downlink-Konfiguration in einer Downlink-Steuerinformationsnachricht, DCI-Nachricht, enthalten ist, die unter Verwendung einer temporären Funknetzkennung, RNTI, verschlüsselt wurde, die zur Verwendung durch das UE für LAA-Kommunikationen spezifiziert wurde.

4. UE (102) nach Anspruch 3, wobei die Verarbeitungsschaltung (1706) konfiguriert ist, um auf zwei oder mehr U-CCs zu arbeiten, die auf zwei oder mehr separaten bedienenden Zellen arbeiten, und wobei die DCI-Nachricht angibt, welche der zwei oder mehr separaten bedienenden Zellen für LAA aktiviert sind.

5. UE (102) nach einem der Ansprüche 1-4, wobei die Sendeempfängerschaltung (1702) konfiguriert ist, um das LAA-Startbenachrichtigungssignal (502) periodisch zu empfangen, und wobei die Verarbeitungsschaltung (1706) konfiguriert ist, um PUSCH-Kommunikationen zu unterdrücken, wenn das LAA-Startbenachrichtigungssignal nicht innerhalb einer Benachrichtigungsperiode empfangen wird.

6. UE (102) nach einem der Ansprüche 1-5, wobei die Verarbeitungsschaltung (1706) konfiguriert ist, um: Blinddecodierung eines physikalischen Downlink-Steuerkanals, PDCCH, auf der ersten bedienenden Zelle in einem gemeinsamen Suchraum, CSS, durchzuführen.

7. UE (102) nach einem der Ansprüche 1-6, ferner umfassend zwei oder mehr Antennen (1701).

8. Nichtflüchtiges computerlesbares Speichermedium, das Anweisungen zur Ausführung durch einen oder mehrere Prozessoren speichert, um ein Benutzergerät, UE, (102) zu Folgendem zu veranlassen:

Empfangen, von einer Basisstation (104) auf einer ersten bedienenden Zelle, einer Uplink/Downlink-Konfiguration für einen unlizenzierten Komponententräger, U-CC, der auf einer zweiten bedienenden Zelle arbeitet, die für Funkrahmen, die auf der zweiten bedienenden Zelle übertragen werden, angibt, welche Unterrahmen für Uplink-Übertragungen zu verwenden sind und welche Unterrahmen für Downlink-Übertragungen zu verwenden sind;
Empfangen eines Signals von der Basisstation (104), um das UE über einen Ort zu benachrichtigen, an dem ein CSI-Referenzsignal, CSI-RS, zur Verwendung beim Messen von CSI-Werten zu detektieren ist; und
Messen von Kanalzustandsinformations-, CSI-, Werten basierend auf Downlink-Kommunikationen und ferner basierend auf dem CSI-RS und Kommunizieren auf einem gemeinsam genutzten physikalischen Uplink-Kanal, PUSCH, der zweiten bedienenden Zelle innerhalb von Unterrahmen der zweiten bedienenden Zelle, wie in der Uplink/Downlink-Konfiguration angegeben, als Reaktion auf das Empfangen eines Startbenachrichtigungssignals für lizenzierten unterstützten Zugriff, LAA, von der Basisstation nach dem Empfangen der Uplink/Downlink-Konfiguration, wobei das LAA-Startbenachrichtigungssignal den Start einer Validierungsperiode (508) angibt, und
Übertragen während der Validierungsperiode gemäß der Uplink/Downlink-Konfiguration, wobei:
das CSI-RS eines von einem Nicht-Null-Leistungs-CSI-RS, NZP-CSI-RS, und einem Null-Leistungs-CSI-RS, ZP-CSI-RS, umfasst, und wobei das NZP-CSI-RS eines von einem Typ-1-NZP-CSI-RS, das in einem Unterrahmen empfangen wird, der das LAA-Startbenachrichtigungssignal (502) umfasst, und einem Typ-2-NZP-CSI-RS, das periodisch empfangen wird, umfasst.

9. Nichtflüchtiges computerlesbares Speichermedium nach Anspruch 8, wobei die Uplink/Downlink-Konfiguration in einer Downlink-Steuerinformationsnachricht, DCI-Nachricht, enthalten ist, die unter Verwendung einer temporären LAA-Funknetzkennung, RNTI, verschlüsselt wurde, und wobei die Anweisungen das UE (102) ferner zu Folgendem veranlassen:
Kommunizieren auf zwei oder mehr U-CCs, die auf zwei oder mehr separaten bedienenden Zellen arbeiten, wobei die DCI-Nachricht angibt, welche der zwei oder mehr bedienenden Zellen für LAA aktiviert sind.

10. Nichtflüchtiges computerlesbares Speichermedium nach einem der Ansprüche 8-9, wobei das LAA-Startbenachrichtigungssignal (502) periodisch empfangen wird, und wobei die Anweisungen das UE (102) ferner veranlassen, PUSCH-Kommunikationen zu unterdrücken, wenn das LAA-Startbenachrichtigungssignal nicht innerhalb einer Benachrichtigungsperiode empfangen wird.

11. Nichtflüchtiges computerlesbares Speichermedium nach einem der Ansprüche 8-10, wobei die Anweisungen das UE (102) ferner zu Folgendem veranlassen:
Durchführen von Blinddecodierung eines physikalischen Downlink-Steuerkanals, PDCCH, auf der ersten bedienenden Zelle in einem gemeinsamen Suchraum, CSS.

12. Nichtflüchtiges computerlesbares Speichermedium nach einem der Ansprüche 8-11, wobei die erste bedienende Zelle auf einem lizenzierten Kanal eingesetzt wird.

**13.** Nichtflüchtiges computerlesbares Speichermedium nach einem der Ansprüche 8-12, wobei das LAA-Startbenachrichtigungssignal (502) eines von einem primären Synchronisationssignal, PSS, und einem sekundären Synchronisationssignal, SSS, umfasst.

**Revendications**

**1.** Équipement utilisateur, UE, (102) comprenant :

une circuiterie d'émetteur-récepteur (1702) configurée pour :

recevoir, à partir d'une station de base (104) sur une première cellule de desserte, une configuration de liaison montante/liaison descendante pour une porteuse composante sans licence, U-CC, fonctionnant sur une deuxième cellule de desserte qui indique, pour des trames radio transmises sur la deuxième cellule de desserte, quelles sous-trames doivent être utilisées pour les transmissions de liaison montante et quelles sous-trames doivent être utilisées pour les transmissions de liaison descendante ; recevoir un signal à partir de la station de base (104) pour notifier à l'UE un emplacement sur lequel détecter un signal de référence de CSI, CSI-RS, pour l'utilisation dans la mesure de valeurs de CSI ; et

une circuiterie de traitement (1706) configurée pour mesurer des valeurs d'information d'état de canal, CSI, sur la base de communications de liaison descendante et pour donner instruction à la circuiterie d'émetteur-récepteur de communiquer sur un canal physique partagé de liaison montante, PUSCH, de la deuxième cellule de desserte, à l'intérieur de sous-trames de la deuxième cellule de desserte comme indiqué dans la configuration de liaison montante/liaison descendante, en réponse à la réception d'un signal de notification de départ d'accès assisté sous licence, LAA, (502) à partir de la station de base subséquente à la réception de la configuration de liaison montante/liaison descendante, dans lequel le signal de notification de départ de LAA indique le début d'une période de validation (508) ; dans lequel l'UE est configuré en outre pour transmettre durant la période de validation en fonction de la configuration de liaison montante/liaison descendante ; et dans lequel : le CSI-RS comporte un parmi un CSI-RS de puissance non nulle, NZP-CSI-RS, et un CSI-RS de puissance nulle, ZP-CSI-RS, et dans lequel le NZP-CSI-RS comporte un parmi un NZP-CSI-RS de type 1, qui est reçu dans une sous-trame qui comporte le signal de notification de départ de LAA (502) et un NZP-CSI-RS de type 2, qui est reçu périodiquement.

**2.** L'UE (102) selon la revendication 1, dans lequel le signal de notification de départ de LAA (502) comporte en outre une indication d'une sous-trame de départ au niveau de laquelle l'UE commence à mesurer des valeurs de CSI sur des signaux de la deuxième cellule de desserte.

**3.** L'UE (102) selon une des revendications 1 à 2, dans lequel la configuration de liaison montante/liaison descendante est comprise dans un message d'information de contrôle de liaison descendante, DCI, qui a été brouillé en utilisant un identificateur temporaire de réseau radio, RNTI, qui a été spécifié pour l'utilisation par l'UE pour des communications LAA.

**4.** L'UE (102) selon la revendication 3, dans lequel la circuiterie de traitement (1706) est configurée pour fonctionner sur au moins deux U-CC fonctionnant sur au moins deux cellules de desserte distinctes, et dans lequel le message DCI indique lesquelles des au moins deux cellules de desserte distinctes sont activées pour LAA.

**5.** L'UE (102) selon une des revendications 1 à 4, dans lequel la circuiterie d'émetteur-récepteur (1702) est configurée pour recevoir périodiquement le signal de notification de départ de LAA (502), et dans lequel la circuiterie de traitement (1706) est configurée pour supprimer les communications de PUSCH si le signal de notification de départ de LAA n'est pas reçu à l'intérieur d'une période de notification.

**6.** L'UE (102) selon une des revendications 1 à 5, dans lequel la circuiterie de traitement (1706) est configurée pour : réalisé un codage en aveugle d'un canal physique de contrôle de liaison descendante, PDCCH, sur la première cellule de desserte dans un espace de recherche commun, CSS.

**7.** L'UE (102) selon une des revendications 1 à 6, comprenant en outre au moins deux antennes (1701).

**8.** Un support de stockage non transitoire lisible par calculateur qui stocke des instructions destinées à être exécutées par un ou plusieurs processeurs pour amener un équipement utilisateur, UE, (102) à :

recevoir, à partir d'une station de base (104) sur une première cellule de desserte, une configuration de liaison montante/liaison descendante pour une porteuse composante sans licence, U-CC, fonctionnant sur une deuxième cellule de desserte qui indique, pour des trames radio transmises sur la deuxième cellule de desserte, quelles sous-trames doivent être utilisées pour les transmissions de liaison montante et quelles sous-trames doivent être utilisées pour les transmissions de liaison descendante ;

recevoir un signal à partir de la station de base (104) pour notifier à l'UE un emplacement sur lequel détecter un signal de référence de CSI, CSI-RS, pour l'utilisation dans la mesure de valeurs de CSI ; et

mesurer des valeurs d'information d'état de canal, CSI, sur la base de communications de liaison descendante et sur la base en outre du CSI-RS, et communiquer sur un canal physique partagé de liaison montante, PUSCH, de la deuxième cellule de desserte, à l'intérieur de sous-trames de la deuxième cellule de desserte comme indiqué dans la configuration de liaison montante/liaison descendante, en réponse à la réception d'un signal de notification de départ d'accès assisté sous licence, LAA, à partir de la station de base subséquente à la réception de la configuration de liaison montante/liaison descendante, dans lequel le signal de notification de départ de LAA indique le début d'une période de validation (508), et

transmettre durant la période de validation en fonction de la configuration de liaison montante/liaison descendante,

dans lequel :

le CSI-RS comporte un parmi un CSI-RS de puissance non nulle, NZP-CSI-RS, et un CSI-RS de puissance nulle, ZP-CSI-RS, et dans lequel le NZP-CSI-RS comporte un parmi un NZP-CSI-RS de type 1, qui est reçu dans une sous-trame qui comporte le signal de notification de départ de LAA (502) et un NZP-CSI-RS de type 2, qui est reçu périodiquement.

**9.** Le support de stockage non transitoire lisible par calculateur selon la revendication 8, dans lequel la configuration de liaison montante/liaison descendante est comprise dans un message d'information de contrôle de liaison descendante, DCI, qui a été brouillé en utilisant un identificateur temporaire de réseau radio, RNTI, de LAA, et dans lequel les instructions amènent en outre l'UE (102) à :

communiquer sur au moins deux U-CC fonctionnant sur au moins deux cellules de desserte distinctes, dans lequel le message DCI indique lesquelles des au moins deux cellules de desserte sont activées pour LAA.

**10.** Le support de stockage non transitoire lisible par calculateur selon une des revendications 8 à 9, dans lequel le signal de notification de départ de LAA (502) est reçu périodiquement, et dans lequel les instructions amènent en outre l'UE (102) à supprimer des communications de PUSCH si le signal de notification de départ de LAA n'est pas reçu à l'intérieur d'une période de notification.

**11.** Le support de stockage non transitoire lisible par calculateur selon une des revendications 8 à 10, dans lequel les instructions amènent en outre l'UE (102) à :

réaliser un codage en aveugle d'un canal physique de contrôle de liaison descendante, PDCCH, sur la première cellule de desserte dans un espace de recherche commun, CSS.

**12.** Le support de stockage non transitoire lisible par calculateur selon une des revendications 8 à 11, dans lequel la première cellule de desserte est déployée sur un canal sous licence.

**13.** Le support de stockage non transitoire lisible par calculateur selon une des revendications 8 à 12, dans lequel le signal de notification de départ de LAA (502) comporte un parmi un signal de synchronisation primaire, PSS, et un signal de synchronisation secondaire, SSS.

Fig. 1

Same format size with DCI
format 1C or 1A

M fields M<=N, each field might be present and 1:1
mapping with serving cell in ON-state, which means M
value is variable over time.

200

202    204    206    208    210    212    214

Fig. 2

Fig. 3

EP 3 216 136 B1

Fig. 4

UL subframe

No transmission

UL scheduling

Virtual U L/DL indication

402

404

408

406

410

Frame k+1

One radio frame, Tf = 10 ms

0 1 2 3 4 5 6 7 8 9

CCA by eNB

PCC on Licensed band (FDD DL)

SCC on unlicensed band

Fig. 5A

Fig. 5B

Fig. 6A

Fig. 6B

EP 3 216 136 B1

Fig. 7

Fig. 8

Fig. 9

One Frame = 10 ms

1 subframe = 1 ms

| F ↕ | F ↕ | F ↕ | F ↕ | F ↕ | F ↕ | F ↕ | F ↕ | F ↕ | F ↕ |
|---|---|---|---|---|---|---|---|---|---|
| 0 | 1 | 2 | 3 | 4 | 5 | 6 | 7 | 8 | 9 |

Fig. 10

Fig. 11

Fig. 12

EP 3 216 136 B1

TCTT    Type 2 CSI-RS periodically    TCTT    TCTT    TCTT

1302

T1    1304    T2

Wi-Fi    Wi-Fi    Wi-Fi    Wi-Fi    Time Domain

Fig. 13

EP 3 216 136 B1

Fig. 14

Fig. 15

EP 3 216 136 B1

Fig. 16

TRANSCEIVER ⎯1702

PROCESSING ⎯1706

MEMORY ⎯1708

USER EQUIPMENT (UE)

1701

1700

Fig. 17

TRANSCEIVER ⎯1802

PROCESSING ⎯1806

MEMORY ⎯1808

EVOLVED NODE-B (eNB)

1801

1800

Fig. 18

1900

```
┌─────────────────────────────────┐
│                                 │
│    RECEIVE UPLINK/DOWNLINK       │ 1902
│   CONFIGURATION INFORMATION      │
│          FOR U-CC                │
│                                 │
└─────────────────────────────────┘
                 │
                 ▼
┌─────────────────────────────────┐
│                                 │
│    MEASURE CSI & USE PUSCH       │ 1904
│  ACCORDING TO UPLINK/DOWNLINK    │
│        CONFIGURATION             │
│                                 │
└─────────────────────────────────┘
```

# Fig. 19

**REFERENCES CITED IN THE DESCRIPTION**

**Patent documents cited in the description**

- US 2014071931 A1
- US 2013315114 A1
- US 2014112277 A1
- US 2013208604 A1